# EUROPEAN PATENT SPECIFICATION

(11) **EP 2 720 126 B1**
(45) Date of publication and mention of the grant of the patent: **29.11.2017**
(21) Application number: 13187673.2
(22) Date of filing: 08.10.2013
(51) Int. Cl.: H04M 1/725, H04M 1/2745, G06F 3/0481, G06F 9/44, G06K 9/22, G06K 9/00

(54) **Method and apparatus for generating task recommendation icon in a mobile device**
Verfahren und Vorrichtung zur Erzeugung eines Aufgabenempfehlungssymbols in einer mobilen Vorrichtung
Procédé et appareil permettant de générer une icône de recommandation de tâche dans un dispositif mobile

(30) Priority: 09.10.2012 KR 20120111760
(43) Date of publication of application: 16.04.2014
(73) Proprietor: Samsung Electronics Co., Ltd., Gyeonggi-do 443-742 (KR)
(72) Inventor: Yang, Ji-Eun, 443-742 Gyeonggi-do (KR); Watanabe, Masato, Yokohama-shi, Kanagawa 2300027 (JP); Yang, Hui-Chul, 443-742 Gyeonggi-do (KR); Won, Sung-Joon, 443-742 Gyeonggi-do (KR); Jegal, Yun, 443-742 Gyeonggi-do (KR); Joo, Jong-Sung, 443-742 Gyeonggi-do (KR)
(74) Representative: HGF Limited

(56) References cited:
- EP-A1- 1 781 000
- EP-A2- 0 936 791
- WO-A2-2007/094894
- US-A1- 2008 309 617
- US-A1- 2009 319 181

## Description

### BACKGROUND OF THE INVENTION

### 1. Field of the Invention:

The present invention relates to a method and apparatus for generating a task recommendation icon in a mobile device. More particularly, the present invention relates to a method and apparatus for generating a task recommendation icon using user log information.

### 2. Description of the Related Art:

Mobile devices have recently provided more and more services and additional functions. In order to increase the utility of mobile devices and satisfy various user demands, a variety of applications have been developed for the mobile devices.

A mobile device can store and execute basic applications manufactured and installed by the manufacturer of the mobile device and additional applications downloaded from application sales sites (e.g., application stores). Ordinary developers can develop additional applications and register them to the application sales sites. Therefore, anyone can sell his or her developed applications freely to mobile users on an application sales site. At present, hundreds of thousands of applications are available to mobile devices.

Mobile devices, such as a smart phone or a tablet PC, are capable of storing hundreds of such applicants. Shortcut keys are displayed in the form of icons on the touch screen of the mobile device to execute the individual applications. A user can execute an intended application in the mobile device by touching one of the displayed icons. In addition to the shortcut keys, various visual objects including widgets, photos, and text are displayed on the touch screen of the mobile device.

As various applications are provided to mobile devices to stimulate customers' curiosity and satisfy their demands, the increase of applications brings about a problem. Too many applications are stored in a mobile device and only a limited number of icons can be displayed on the 4-inch to 10-inch screen of the mobile device. Moreover, the user should search an application list for his or her intended application among a large number of individual applications, taking much time.

A shortcut icon for executing an application is restricted to the function of executing the corresponding application when touched. Accordingly, to execute an intended task, the user should first execute an application associated with the intended task by touching a shortcut icon representing the application and then should add an input to execute the task. These plural actions give rise to user inconvenience in executing a task.

Preset images or preset combinations of an image and text are given as shortcut icons for applications. Accordingly, an icon is required which enables a user to execute an intended task with a small number of touches. In addition, there exists a need for icons available in various forms in relation to a task.

The above information is presented as background information only to assist with an understanding of the present disclosure. No determination has been made, and no assertion is made, as to whether any of the above might be applicable as prior art with regard to the present invention.

US2008/0309617 A1 discloses a graphical communication user interface for a communications device that enables a user to open a communications channel by selecting an image on a monitor of the device.

US2009/319181 A1 discloses the provision of information services based on user gestures and location information related to a mobile device.

EP1780000 A1 discloses a method for analysing information and executing functions corresponding to the analysed information in a portable terminal.

### SUMMARY OF THE INVENTION

An aspect of the present invention is to address at least the above-mentioned problems and/or disadvantages and to provide at least the advantages described below. Accordingly, the present invention provides a method and apparatus for generating and displaying at least one task recommendation icon corresponding to content displayed on a touch screen, as defined in independent claims 1 and 11, respectively.

Another aspect of the present invention is to provide a method and apparatus for generating and displaying at least one task recommendation icon based on user log information.

Another aspect of the present invention is to provide a method and apparatus for generating and displaying at least one task recommendation icon in such a manner that a user can readily identify the function of the at least one task recommendation icon.

In accordance with an aspect of the present invention, a method for generating a task recommendation icon in a mobile device is provided. The method includes displaying content on a touch screen, extracting at least one object from the content, extracting at least one action for the at least one object based on user log information, generating at least one recommendation task for the at least one object and the at least one action, generating at least one task recommendation icon representing the at least one recommendation task, and displaying the at least one task recommendation icon on the touch screen.

In accordance with another aspect of the present invention, an apparatus for generating a task recommendation icon in a mobile device is provided. The apparatus includes a touch screen for displaying content, and a controller for extracting at least one object from the content, for extracting at least one action for the at least one object based on user log information, for generating at least one recommendation task for the at least one object and the at least one action, for generating at least one task recommendation icon representing the at least one recommendation task, and for displaying the at least one task recommendation icon on the touch screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 is a block diagram of a mobile device according to an exemplary embodiment of the present invention;
FIG. 2 is a front perspective view of a mobile device according to an exemplary embodiment of the present invention;
FIG. 3 is a rear perspective view of a mobile device according to an exemplary embodiment of the present invention;
FIG. 4 is a flowchart illustrating a method for generating a task recommendation icon in a mobile device according to an exemplary embodiment of the present invention;
FIGS. 5A to 5D illustrate screens showing an operation for generating and displaying task recommendation icons in a mobile device according to an exemplary embodiment of the present invention;
FIGS. 6A to 6D illustrate screens showing an operation for changing priority levels of a plurality of task recommendation icons and sequentially displaying the task recommendation icons according to the changed priority levels, upon detection of a priority changing gesture in a mobile device according to an exemplary embodiment of the present invention;
FIGS. 7A and 7B illustrate screens showing an exemplary operation for generating and displaying task recommendation icons in a mobile device according to an exemplary embodiment of the present invention;
FIGS. 8A and B illustrate screens showing an exemplary operation for generating and displaying task recommendation icons in a mobile device according to an exemplary embodiment of the present invention;
FIGS. 9A and 9B illustrate screens of a mobile device on which task recommendation icons are generated and displayed according to an exemplary embodiment of the present invention;
FIGS. 10A and 10B illustrate screens showing an exemplary operation for generating and displaying task recommendation icons in a mobile device according to an exemplary embodiment of the present invention;
FIGS. 11A to 11C illustrate screens showing an exemplary operation for generating and displaying task recommendation icons in a mobile device according to an exemplary embodiment of the present invention;
FIGS. 12A to 12C illustrate screens showing an exemplary operation for generating and displaying task recommendation icons in a mobile device according to an exemplary embodiment of the present invention;
FIG. 13 is a flowchart illustrating a method for generating a task recommendation icon in a mobile device according to another exemplary embodiment of the present invention;
FIGS. 14A to 14F illustrate screens showing an operation for generating and displaying task recommendation icons in a mobile device according to another exemplary embodiment of the present invention;
FIGS. 15A to 15F illustrate screen showing an operation for generating and displaying task recommendation icons in a mobile device according to another exemplary embodiment of the present invention;
FIG. 16 is a flowchart illustrating a method for generating a task recommendation icon in a mobile device according to another exemplary embodiment of the present invention;
FIGS. 17A to 17G illustrate screens showing an operation for generating and displaying task recommendation icons in a mobile device according to another exemplary embodiment of the present invention;
FIG. 18 is a flowchart illustrating a method for generating a task recommendation icon in a mobile device according to a further exemplary embodiment of the present invention; and
FIGS. 19A to 19E illustrate screens showing an operation for generating and displaying task recommendation icons in a mobile device according to a further exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The technical terms used in the present invention are provided simply to describe specific embodiments, not intended to restrict the present invention. Herein, singular expressions include plural expressions unless otherwise clarified in the context. In this description, the terms 'include' or 'have' are not interpreted as necessarily including all of the features, numbers, steps, operations, components, parts, or a combination thereof described in the specification. Rather, it should be understood that there are possibilities of omitting or adding one or more features, numbers, steps, operations, components, parts, or combinations thereof.

Unless otherwise defined, all the terms used herein including technical or scientific terms have the same meanings as terms generally understood by those skilled in the art. In addition, terms defined in a general dictionary should be understood so as to have the same meanings as contextual meanings of the related art. Unless definitely defined herein, the terms are not interpreted as ideal or excessively formal meanings.

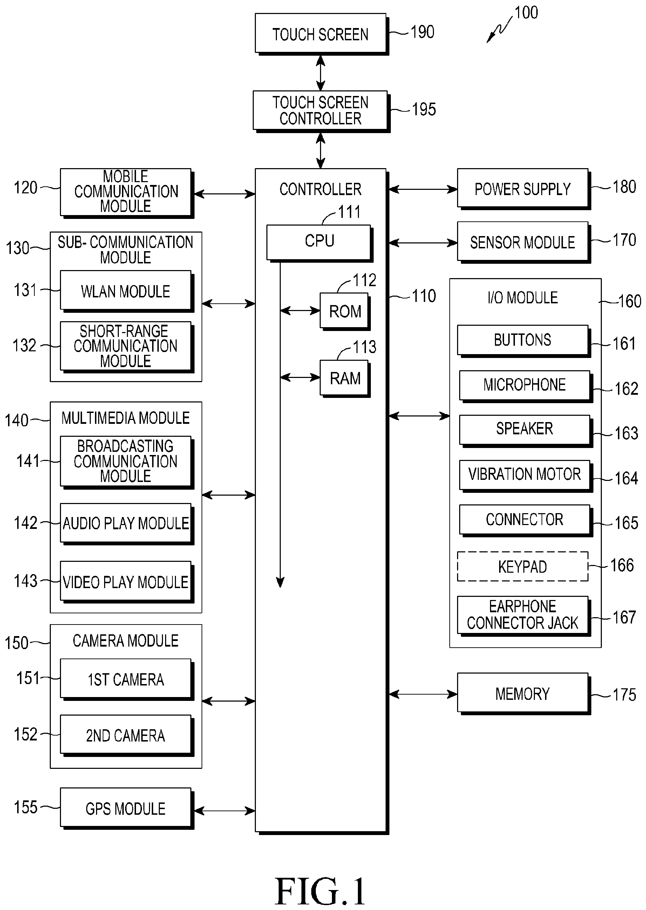

FIG. 1 is a block diagram of a mobile device according to an exemplary embodiment of the present invention.

Referring to FIG. 1, a mobile device 100 may be connected to an external device (not shown) through an external device interface such as a sub-communication module 130, a connector 165, and an earphone connector jack 167. The term 'external device' covers a variety of devices that can be detachably connected to the mobile device 100 by cable, such as an earphone, an external speaker, a Universal Serial Bus (USB) memory, a charger, a cradle, a docking station, a Digital Multimedia Broadcasting (DMB) antenna, a mobile payment device, a health care device (e.g. a blood sugar meter, etc.), a game console, a vehicle navigator, and the like. The 'external device' may include a Bluetooth communication device wirelessly connectable to the mobile device 100 by short-range communication, a Near Field Communication (NFC) device, a Wi-Fi Direct communication device, and a wireless Access Point (AP). In addition, the external device may include another mobile device, a portable phone, a smart phone, a tablet PC, a desktop PC, and a server.

The mobile device 100 includes a display 190 and a display controller 195. The mobile device 100 further includes a controller 110, a mobile communication module 120, the sub-communication module 130, a multimedia module 140, a camera module 150, a Global Positioning System (GPS) module 155, an Input/Output (I/O) module 160, a sensor module 170, a memory 175, and a power supply 180. The sub-communication module 130 includes at least one of a Wireless Local Area Network (WLAN) module 131 and a short-range communication module 132. The multimedia module 140 includes at least one of a broadcasting communication module 141, an audio play module 142, and a video play module 143. The camera module 150 includes at least one of a first camera 151 and a second camera 152. The I/O module 160 includes at least one of buttons 161, a microphone 162, a speaker 163, a vibration motor 164, the connector 165, a keypad 166, and the earphone connector jack 167. The following description is made with the appreciation that the display 190 and the display controller 195 are a touch screen and a touch screen controller, respectively, by way of example.

The controller 110 may include a Central Processing Unit (CPU) 111, a Read Only Memory (ROM) 112 for storing a control program to control the mobile device 100, and a Random Access Memory (RAM) 113 for storing a signal or data received from the outside of the mobile device 100 or for use as a memory space for an operation performed by the mobile device 100. The CPU 111 may include a single core, dual cores, triple cores, or quad cores. The CPU 111, the ROM 112, and the RAM 113 may be connected to one other through an internal bus.

The controller 110 may control the mobile communication module 120, the sub-communication module 130, the multimedia module 140, the camera module 150, the GPS module 155, the I/O module 160, the sensor module 170, the memory 175, the power supply 180, the touch screen 190, and the touch screen controller 195.

The mobile communication module 120 connects the mobile device 100 to an external device through one or more antennas (not shown) by mobile communication under the control of the controller 110. The mobile communication module 120 transmits wireless signals to or receives wireless signals from a portable phone (not shown), a smart phone (not shown), a tablet PC (not shown), or another mobile device (not shown) that has a phone number input to the mobile device 100, for voice call, video call, Short Message Service (SMS), or Multimedia Messaging Service (MMS).

The sub-communication module 130 may include at least one of the WLAN module 131 and the short-range communication module 132. For example, the sub-communication module 130 may include the WLAN module 131 or the short-range communication module 132 alone or both.

The WLAN module 131 may be connected to the Internet under the control of the controller 110 in a place where a wireless AP (not shown) is installed. The WLAN module 131 supports the WLAN standard IEEE 802.11x of the Institute of Electrical and Electronics Engineers (IEEE). The short-range communication module 132 may conduct wireless short-range communication between the mobile device 100 and an image forming device (not shown) under the control of the controller 110. The short-range communication may conform to Bluetooth, Infrared Data Association (IrDA), Wi-Fi Direct, NFC, or other short-range communication standards.

The mobile device 100 may include at least one of the mobile communication module 120, the WLAN module 131, and the short-range communication module 132 according to the capabilities of the mobile device 100. For example, the mobile device 100 may include a combination of the mobile communication module 120, the WLAN module 131, and the short-range communication module 132 according to its capabilities.

The multimedia module 140 may include the broadcasting communication module 141, the audio play module 142, or the video play module 143. The broadcasting communication module 141 may receive a broadcast signal (for example, a TV broadcast signal, a radio broadcast signal, or a data broadcast signal) and additional broadcasting information (for example, an Electronic Program Guide (EPG) or Electronic Service Guide (ESG)) from a broadcasting station through a broadcasting communication antenna (not shown) under the control of the controller 110. The audio play module 142 may open a stored or received digital audio file (for example, a file having a filename extension of mp3, wma, ogg, or wav) under the control of the controller 110. The video play module 143 may open a stored or received digital video file (for example, a file having a filename extension of mpeg, mpg, mp4, avi, mov, or mkv) under the control of the controller 110. The video play module 143 may also open a digital audio file.

The multimedia module 140 may include the audio play module 142 and the video play module 143 without the broadcasting communication module 141. Alternatively, the audio play module 142 or the video play module 143 of the multimedia module 140 may be incorporated into the controller 110.

The camera module 150 may include at least one of the first camera 151 and the second camera 152, for capturing a still image or a video under the control of the controller 110. The first camera 151 or the second camera 152 may include an auxiliary light source (for example, a flash (not shown)) for providing a light intensity required for capturing an image. The first camera 151 may be disposed on the front surface of the mobile device 100, while the second camera 152 may be disposed on the rear surface of the device 100. Alternatively, the first camera 151 and the second camera 152 may be arranged near to each other (for example, the distance between the first camera 151 and the second camera 152 is between 1cm and 8cm) in order to capture a three-dimensional still image or video.

The GPS module 155 may receive radio waves from a plurality of GPS satellites (not shown) in Earth orbit and calculate a position of the mobile device 100 based on the Time of Arrival (ToA) of satellite signals from the GPS satellites to the mobile device 100.

The I/O module 160 may include at least one of a plurality of buttons 161, the microphone 162, the speaker 163, the vibration motor 164, the connector 165, and the keypad 166.

The buttons 161 may be formed on the front surface, a side surface, or the rear surface of a housing of the mobile device 100, and may include at least one of a power/lock button, a volume button, a menu button, a home button, a back button, and a search button.

The microphone 162 receives voice or sound and converts the received voice or sound to an electrical signal under the control of the controller 110.

The speaker 163 may output sounds corresponding to various signals (for example, a wireless signal, a broadcast signal, a digital audio file, a digital video file, a photo shot, and the like) received from the mobile communication module 120, the sub-communication module 130, the multimedia module 140, and the camera module 150 to the outside of the mobile device 100. The speaker 163 may output sounds corresponding to functions (for example, a button manipulation sound or a ring back tone for a call) performed by the mobile device 100. One or more speakers 163 may be disposed at an appropriate position or positions of the housing.

The vibration motor 164 may convert an electrical signal to a mechanical vibration under the control of the controller 110. For example, when the mobile device 100 receives an incoming voice call from another mobile device (not shown) in vibration mode, the vibration motor 164 operates. One or more vibration motors 164 may be mounted inside the housing of the mobile device 100. The vibration motor 164 may operate in response to a user's touch on the touch screen 190 and a continuous movement of the touch on the touch screen 190.

The connector 165 may be used as an interface for connecting the mobile device 100 to an external device (not shown) or a power source (not shown). The connector 165 may transmit data stored in the memory 175 to the external device via a cable connected to the connector 165 or may receive data from the external device via the cable, under the control of the controller 110. The external device may be a docking station and the data may be a signal received from an external input device, for example, a mouse or a keyboard. The mobile device 100 may receive power or charge a battery (not shown) from the power source via the cable connected to the connector 165.

The keypad 166 may receive a key input from the user to control the mobile device 100. The keypad 166 includes a physical keypad (not shown) formed in the mobile device 100 or a virtual keypad (not shown) displayed on the touch screen 190. The physical keypad may be omitted according to the capabilities or configuration of the mobile device 100.

An earphone (not shown) may be connected to the mobile device 100 by being inserted into the earphone connector jack 167.

The sensor module 170 includes at least one sensor for detecting a state of the mobile device 100. For example, the sensor module 170 may include a proximity sensor for detecting whether the user is close to the mobile device 100, an illumination sensor (not shown) for detecting the amount of ambient light around the mobile device 100, a motion sensor (not shown) for detecting a motion of the mobile device 100 (for example, rotation, acceleration or vibration of the mobile device 100), a geomagnetic sensor (not shown) for detecting a point of the compass using the earth's magnetic field, a gravity sensor (not shown) for detecting the direction of gravity, and an altimeter (not shown) for detecting an altitude by measuring the air pressure. At least one sensor may detect a state of the mobile device 100, generate a signal corresponding to the detected state, and transmit the generated signal to the controller 110. A sensor may be added to or removed from the sensor module 170 according to the capabilities of the mobile device 100.

The memory 175 may store input/output signals or data in accordance with operations of the mobile communication module 120, the sub-communication module 130, the multimedia module 140, the camera module 150, the GPS module 155, the I/O module 160, the sensor module 170, and the touch screen 190 under the control of the controller 110. The memory 175 may store a control program for controlling the mobile device 100 or the controller 110, and applications.

The term "memory" covers the memory 175, the ROM 112, and the RAM 113 within the controller 110, or a memory card (not shown) (e.g., a Secure Digital (SD) card or a memory stick) mounted to the mobile device 100. The memory may include a non-volatile memory, a volatile memory, a Hard Disk Drive (HDD), or a Solid State Drive (SSD).

The power supply 180 may supply power to one or more batteries (not shown) mounted in the housing of the mobile device 100 under the control of the controller 110. The one or more batteries supply power to the mobile device 100. Further, the power supply 180 may supply power received from an external power source (not shown) via the cable connected to the connector 165 to the mobile device 100. The power supply 180 may also supply power received wirelessly from then external power source to the mobile device 100 by a wireless charging technology.

The touch screen 190 may provide User Interfaces (UIs) corresponding to various services (for example, call, data transmission, broadcasting, and photo taking) to the user. The touch screen 190 may transmit an analog signal corresponding to at least one touch on a UI to the touch screen controller 195. The touch screen 190 may receive at least one touch input through a user's body part (e.g. a finger) or a touch input tool (for example, a stylus pen). The touch screen 190 may also receive a touch input signal corresponding to a continuous movement of a touch among one or more touches. The touch screen 190 may transmit an analog signal corresponding to the continuous movement of the input touch to the touch screen controller 195.

As used herein, 'touch' may include a non-contact touch, and need not be limited to contacts between the touch screen 190 and the user's body part or the touch input tool. A gap detectable to the touch screen 190 may vary according to the capabilities or configuration of the mobile device 100.

The touch screen 190 may be implemented into, for example, a resistive type, a capacitive type, an infrared type, or an acoustic wave type.

The touch screen controller 195 converts an analog signal received from the touch screen 190 to a digital signal (for example, X and Y coordinates). The controller 110 may control the touch screen 190 using the digital signal received from the touch screen controller 195. For example, the controller 110 may control selection or execution of a shortcut icon (not shown) displayed on the touch screen 190 in response to a touch. The touch screen controller 195 may be incorporated into the controller 110.

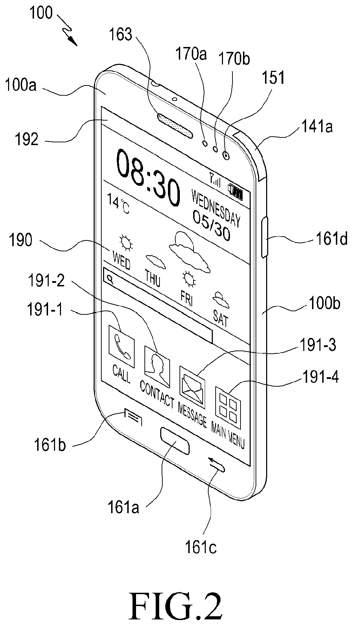

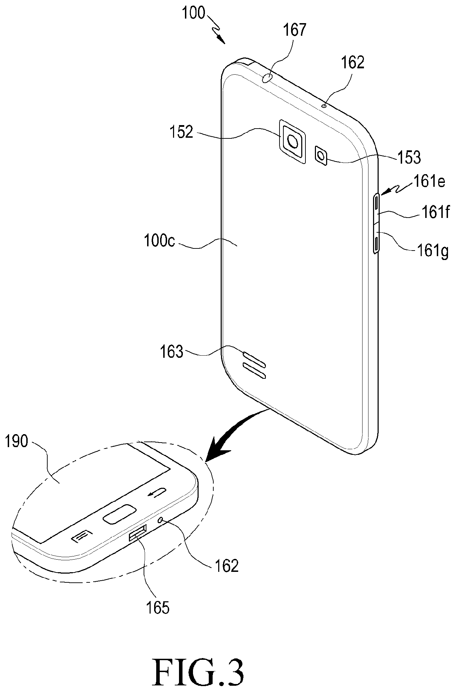

FIGS. 2 and 3 are front and rear perspective views, respectively, of a mobile device according to an exemplary embodiment of the present invention.

Referring to FIGS. 2 and 3, the touch screen 190 is disposed at the center of the front surface 100a of the mobile device 100, occupying the entirety of the front surface 100a. In FIG. 2, a main home screen is displayed on the touch screen 190, by way of example. The main home screen is the first screen to be displayed on the touch screen 190 when the mobile device 100 is powered on. In the case where the mobile device 100 has different home screens on a plurality of pages, the main home screen may be the first of the home screens on the plurality of pages. Shortcut icons 191-1, 191-2 and 191-3 for executing frequently used applications, an application switch key 191-4, time icons, weather icons, and the like may be displayed on the home screen. The application switch key 191-4 is used to display application icons representing applications on the touch screen 190. A status bar 192 may be displayed at the top of the touch screen 190 in order to indicate states of the mobile device 100 such as a battery charged state, a received signal strength, and a current time.

A home button 161a, a menu button 161b, and a back button 161c may be formed at the bottom of the touch screen 190.

The home button 161a is used to display the main home screen on the touch screen 190. For example, upon pressing (or touching) the home button 161a while any home screen other than the main home screen or a menu screen is displayed on the touch screen 190, the main home screen may be displayed on the touch screen 190. Upon pressing (or touching) the home button 161a during execution of applications on the home screen 190, the main home screen illustrated in FIG. 2 may be displayed on the touch screen 190. The home button 161a may also be used to display recently used applications or a task manager on the touch screen 190.

The menu button 161b provides link menus available on the touch screen 190. The link menus may include a widget adding menu, a background changing menu, a search menu, an edit menu, an environment setting menu, etc. During execution of an application, the menu button 161b may provide a link menu linked to the application.

The back button 161c may display the screen previous to a current screen or end the latest used application.

The first camera 151, an illumination sensor 170a, and a proximity sensor 170b may be arranged at a corner of the front surface 100a of the mobile device 100, whereas the second camera 152, a flash 153, and the speaker 163 may be arranged on the rear surface 100c of the mobile device 100.

For example, a power/reset button 161d, a volume button 161e, a terrestrial DMB antenna 141a for receiving a broadcast signal, and one or more microphones 162 may be disposed on side surfaces 100b of the mobile device 100. The DMB antenna 141a may be mounted to the mobile device 100 fixedly or detachably.

The connector 165 is formed on the bottom side surface of the mobile device 100. The connector 165 includes a plurality of electrodes and may be connected to an external device by cable. The earphone connector jack 167 may be formed on the top side surface of the mobile device 100, for allowing an earphone to be inserted.

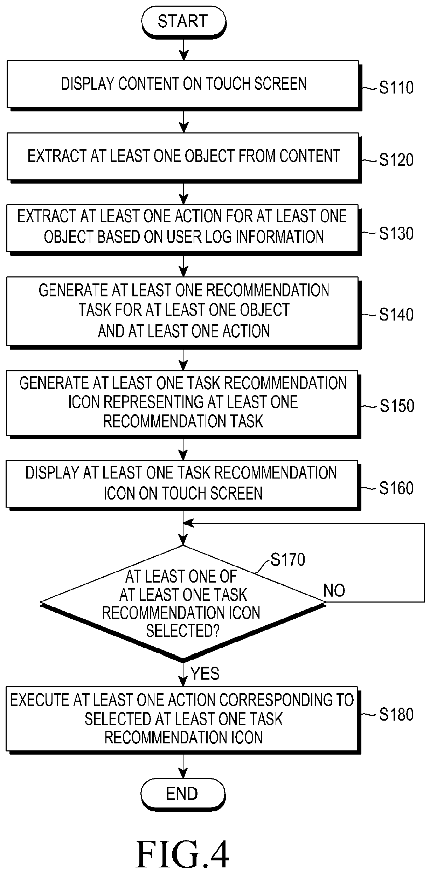

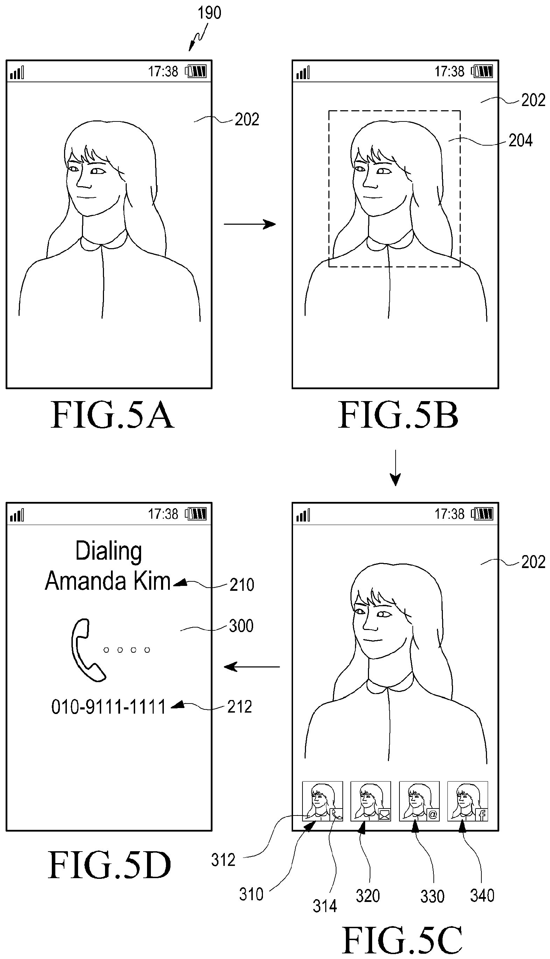

FIG. 4 is a flowchart illustrating a method for generating a task recommendation icon in a mobile device according to an exemplary embodiment of the present invention, and FIGS. 5A to 5D illustrate screens showing an operation for generating and displaying task recommendation icons in a mobile device according to an exemplary embodiment of the present invention.

Referring to FIGS. 4 and 5A to 5D, the controller 110 of the mobile device 100 displays content on the touch screen 190 in step S110. The controller 110 displays content on a screen of the touch screen 190 of the mobile device 100. The content may include at least one of an image, a video, or text. Referring to FIG. 5A, content 202 including an image is displayed on the touch screen 190. For example, a gallery application is being executed in the mobile device 100. The controller 110 may display the content 202 including the image on the touch screen 190 while executing the gallery application as illustrated in FIG. 5A.

The controller 110 extracts at least one object from the content in step S120. The at least one object may include at least one of a name, an IDentifier (ID), a place name, an address, a phone number, a location, or a shop name. For example, the controller 110 may extract the at least one object such as a name from the content including the image. As illustrated in FIG. 5B, the controller 110 may extract the name of a person appearing in the image of the content 202 as the at least one object from the content 202. For example, the controller 110 may recognize the face 204 of the person appearing in the image of the content 202 illustrated in FIG. 5B and extract the name of the person. Specifically, the controller 110 may extract the name of the person appearing in the image of the content 202 displayed on the touch screen 190 by comparing the face 204 of the person with the faces of persons stored in the memory 175.

The memory 175 may pre-store at least one data related to at least one person, for example, a facial image, phone number, email address, ID, etc. of the at least one person. Thus, the controller 110 may extract the name of the person in the image 202, for example, 'Amanda Kim' by comparing the face 204 of the person with the faces of persons stored in the memory 175. The memory 175 may pre-store the at least one data related to the at least one person, for example, the facial image, phone number, email address, ID, and the like of the at least one person in a contact list. The controller 110 may extract the name of the person in the image 202, for example, 'Amanda Kim' by comparing the face 204 of the person with the faces of persons stored in the contact list of the memory 175. The controller 110 may extract at least one data of the person in the image 202, for example, at least one of the ID, address, or phone number of the person from the memory 175. For example, the controller 110 may extract at least one of a phone number, email address, address, or Social Networking Service (SNS) ID of the person as well as the name of the person, 'Amanda Kim'.

In addition, the controller 110 may extract the at least one object from the content through the Internet. The controller 110 may access a search site by executing an Internet application, performs a search regarding the content by entering the content on the search site, and extract the at least one object from the content based on search results.

The controller 110 may also extract the at least one object from content including the image and text by Optical Character Recognition (OCR). OCR is a technology of reading text displayed on a screen. Compared to a barcode, the OCR technology allows direct text input, thus simplifying an input process. In OCR, text can be read optically by segmenting a text pattern into narrow blocks and converting each block to 0 or 1 depending on whether the block is bright or dark. OCR is widely used in detecting numbers, English characters, and Chinese characters.

The controller 110 extracts at least one action for the at least one object based on user log information in step S130. The at least one action refers to a specific execution under the control of the controller 110 in the mobile device 100. The user log information is a use pattern including execution information about the at least one action. The execution information about the at least one action may specify at least one of the number of executions, execution time, and execution order of the at least one action.

The controller 110 may extract the at least one action for the at least one object based on the user log information being a use pattern of the user. For example, the name 'Amanda Kim' may be extracted as the at least one object from the content such as the image 202 in step S120 as illustrated in FIG. 5B. In step S130, the controller 110 may extract at least one action for the at least one object such as the name 'Amanda Kim'. The memory 175 may pre-store information about at least one action for the at least one object based on the user log information. For example, the memory 175 may pre-store a list such as Table 1 below that maps at least one action to at least one object such as a pre-stored name 'Amanda Kim' or 'Noel Gallagher'.

**Table 1**

| Object | Action |
|---|---|
| Amanda Kim | phone application execution |
| | message application execution |
| | email application execution |
| | SNS application execution |
| Noel Gallagher | SNS application execution |
| | messenger application execution |
| | phone application execution |
| | message application execution |

The controller 110 may extract 'phone application execution', 'message application execution', 'email application execution', and 'SNS application execution' as the at least one action for the name 'Amanda Kim' from the memory 175, as illustrated in Table 1. For the at least one object such as the name 'Noel Gallagher', the controller 110 may extract 'SNS application execution', 'messenger application execution', 'phone application execution', and 'message application execution' as the at least one action from the memory 175, as illustrated in Table 1.

For the at least one object, the at least one action may be pre-stored in the memory 175 based on the user log information being the use pattern of the user. For example, the mobile device 100 may execute an action such as 'phone application execution', 'message application execution', 'email application execution', or 'SNS application execution' for the at least one object such as the name 'Amanda Kim'. Each time the at least one action is executed for the at least one object such as the name 'Amanda Kim', the controller 110 may store execution information about the at least one action in the memory 175. Each time the at least one action is executed for the at least one object such as the name 'Amanda Kim', the controller 110 may store information about at least one of the number of executions, execution time, and execution order of the at least one action in the memory 175. For example, as illustrated in Table 2 below, whenever the at least one action is executed for the at least one object such as the name 'Amanda Kim', the controller 110 may store execution information including the number of executions of the at least one action in the memory 175.

**Table 2**

| Object | Action | Number of executions |
|---|---|---|
| Amanda Kim | phone application execution | 504 |
| | message application execution | 302 |
| | email application execution | 58 |
| | SNS application execution | 23 |

Referring to Table 2, it is noted from information stored in the memory 175 that the 'phone application', 'message application', 'email application', and 'SNS application' have been executed 504 times, 302 times, 58 times, and 23 times, respectively, for the at least one object such as the name 'Amanda Kim'.

The user log information being the use pattern of the user may be formed based on the execution information stored in the memory 110, as illustrated in Table 2. The 'phone application' is the most used application (504 times) for the at least one object such as the name 'Amanda Kim'. This indicates that the 'phone application' is executed the most times in the use pattern of the at least one object such as the name 'Amanda Kim'. The 'message application' (302 times) is the second most used application for the at least one object such as the name 'Amanda Kim'. This indicates that the 'message application' is executed second-most times in the use pattern of the at least one object such as the name 'Amanda Kim'. The 'email application' (58 times) is the third most used application for the at least one object such as the name 'Amanda Kim'. This indicates that the 'email application' is executed third-most times in the use pattern of the at least one object such as the name 'Amanda Kim'. The 'SNS application' (23 times) is the fourth most used application for the at least one object such as the name 'Amanda Kim'. This indicates that the 'SNS application' is executed fourth-most times in the use pattern of the at least one object such as the name 'Amanda Kim'.

Accordingly, the controller 110 may store the use pattern of the user by storing the execution information about at least one action executed for the at least one object in the memory 175. The use pattern of the user may form the user log information. The controller 110 can extract the at least one action corresponding to the at least object based on the user log information formed for the at least one object according to an exemplary embodiment of the present invention. Consequently, the user does not need to extract the at least one action for the at least one object because the mobile device 100 can extract the at least one action for the at least one object based on the user log information being the use pattern of the user. In this manner, exemplary embodiments of the present invention obviates the need for the user's extraction of the at least one action.

The controller 110 generates at least one recommendation task for the at least one object and the at least one action in step S140. The at least one recommendation task refers to execution of the at least one action for the at least one object. The controller 110 generates the at least one task that is to execute the at least one action extracted in step S130 for the at least one object.

For example, as illustrated in FIG. 5B, the controller 110 may extract at least one of 'Amanda Kim' and the phone number, email address, and SNS ID of Amanda Kim as at least one object from the content such as the image 202 in step S120. In step S130, the controller 110 may extract at least one action for the at least one object 'Amanda Kim' based on user log information. The extracted at least one action may be 'phone application execution', 'message application execution' 'email application execution', and 'SNS application execution'. The controller 110 may then generate at least one recommendation task for the at least one object and the at least one action in step S140. For example, the controller 110 may generate 'phone application execution', 'message application execution' 'email application execution', and 'SNS application execution' as the at least one action for the at least one object 'Amanda Kim'. Thus, exemplary embodiments of the present invention are advantageous in that a task is not simply recommended but recommended in regard to at least one object. At least one task is recommended for at least one object extracted from content displayed on the touch screen, rather than merely recommending a task, for example, execution of a specific application.

The controller 110 generates at least one task recommendation icon representing the at least one recommendation task in step S150. The at least one task recommendation icon may include a part of the content and a symbol representing the at least one action. The content includes at least one of an image, a video, and text. The symbol representing the at least one action may be an icon image of an application that executes the at least one action.

Referring to FIGS. 5A and 5B, for example, the controller 10 may extract at least one of 'Amanda Kim' and the phone number, email address, and SNS ID of Amanda Kim as at least one object from the content such as the image 202 in step S120. In step S130, the controller 110 may extract at least one action for the at least one object 'Amanda Kim' based on user log information. The at least one action may be 'phone application execution', 'message application execution' 'email application execution', and 'SNS application execution'. Subsequently, the controller 110 may generate at least one recommendation task for the at least one object and the at least one action in step S140. For example, the controller 110 may generate 'phone application execution', 'message application execution' 'email application execution', and 'SNS application execution' as first to fourth recommendation tasks for the at least one object 'Amanda Kim'. In step S150, the controller 110 may generate at least one task recommendation icon representing the at least one recommendation task. The at least one recommendation task icon may include a part of the content and a symbol representing the at least one action.

Referring to FIG. 5C, the content includes the image 202 and an application for executing the first recommendation task is a phone application. The controller 110 may generate a first task recommendation icon 310 including a part 312 of the content and an icon image 314 representing the phone application. An application for executing the second recommendation task is a message application. The controller 110 may generate a second task recommendation icon 320 including the content part and an icon image representing the message application. An application for executing the third recommendation task is an email application. The controller 110 may generate a third task recommendation icon 330 including the content part and an icon image representing the email application. An application for executing the fourth recommendation task is an SNS application. The controller 110 may generate a fourth task recommendation icon 340 including the content part and an icon image representing the SNS application.

According to an exemplary embodiment of the present invention, an icon including a part of content and a symbol representing at least one action is generated, instead of an icon simply representing a task. Accordingly, the user can readily perceive the meaning of the icon. The user can easily determine from the part of the content that the icon is related to the content. In addition, the user can also perceive from the symbol representing the at least one action that the icon is related to the at least one action corresponding to the content. As a result, the user can readily identify the meaning of the at least one task recommendation icon.

The controller 110 displays the at least one task recommendation icon on the touch screen 190 in step S160. The controller 110 may display the at least one task recommendation icon generated in step S150 on the touch screen 190. As illustrated in FIG. 5C, for example, the controller 110 may display, on the touch screen 190, the first to fourth task recommendation icons 310 to 340 generated in step S150 corresponding to the first to fourth recommendation tasks for the at least one object 'Amanda Kim', which are respectively 'phone application execution', 'message application execution', 'email application execution', and 'SNS application execution'.

The at least one task recommendation icon may be a plurality of task recommendation icons, and the controller 110 may display the plurality of task recommendation icons sequentially on the touch screen 190 according to their priority levels determined based on the user log information. The controller 110 may prioritize the plurality of task recommendation icons based on the execution information included in the user log information. The execution information may specify at least one of the number of executions, an execution time, and an execution order.

Referring to Table 2 again, for example, since 'phone application' has been executed the most times (i.e., 504 times) for 'Amanda Kim', the controller 110 may display the first task recommendation icon 310 representing the first recommendation task being 'phone application execution' for the at least one object 'Amanda Kim' in a first place, for example, at the leftmost position of the bottom of the touch screen 190 as illustrated in FIG. 5C. Since 'message application' has been executed the second most times (i.e., 302 times) for 'Amanda Kim', the controller 110 may display the second task recommendation icon 320 representing the second recommendation task being 'message application execution' for the at least one object 'Amanda Kim' in a second place, for example, next to the first task recommendation icon 310 at the bottom of the touch screen 190 as illustrated in FIG. 5C. Since 'email application' has been executed the third most times (i.e., 58 times) for 'Amanda Kim', the controller 110 may display the third task recommendation icon 330 representing the third recommendation task being 'email application execution' for the at least one object 'Amanda Kim' in a third place, for example, next to the second task recommendation icon 320 at the bottom of the touch screen 190 as illustrated in FIG. 5C. Since 'SNS application' has been executed the fourth most times (i.e. 23 times) for 'Amanda Kim', the controller 110 may display the fourth task recommendation icon 340 representing the fourth recommendation task being 'SNS application execution' for the at least one object 'Amanda Kim' in a fourth place, for example, next to the third task recommendation icon 330 at the bottom of the touch screen 190 as illustrated in FIG. 5C.

Accordingly, a plurality of task recommendation icons are displayed in a sequential order on the touch screen according to their priority levels based on user log information in the exemplary embodiment of the present invention. As a result, the user can readily recognize the priority level of a specific task recommendation icon according to his or her use pattern even at a glance of the arrangement order of the plurality of task recommendation icons.

In addition, upon detection of a priority changing gesture, the controller 110 may change the priority levels of the plurality of task recommendation icons displayed on the touch screen 190 and may sequentially display the plurality of task recommendation icons on the touch screen 190 according to the changed priority levels.

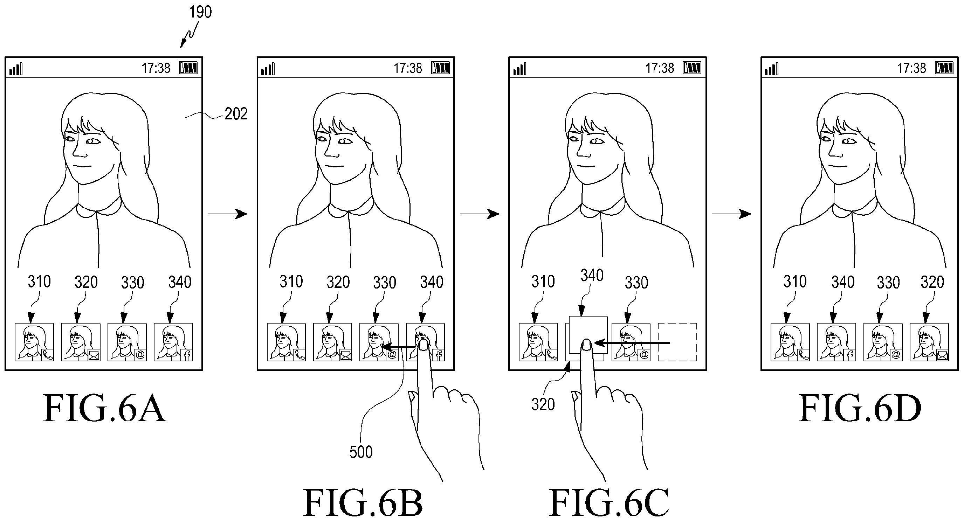

FIGS. 6A to 6D illustrate screens showing an operation for detecting a priority changing gesture, changing the priority levels of a plurality of task recommendation icons, and sequentially displaying the plurality of task recommendation icons on the touch screen in a changed order according to the changed priority levels upon detection of a priority changing gesture in a mobile device according to an exemplary embodiment of the present invention.

Referring to FIGS. 6A-6D, the first to fourth task recommendation icons 310 to 340 representing the first to fourth recommendation tasks for the at least one object 'Amanda Kim', which are respectively 'phone application execution', 'message application execution', 'email application execution', and 'SNS application execution' are sequentially displayed on the touch screen 190 as illustrated in FIG. 5C. Then the controller 110 may detect a priority changing gesture 500. For example, the priority changing gesture 500 may be made by touching one task recommendation icon and dragging the touch over another task recommendation icon as illustrated in FIGS. 6B and 6C. The user may make the priority changing gesture 500 by touching the fourth task recommendation icon 340 as illustrated in FIG. 6B and then dragging the touch over the second task recommendation icon 320 as illustrated in FIG. 6C.

Upon detection of the priority changing gesture 500 as illustrated in FIGS. 6B and 6C, the controller 110 may change the priority levels of the plurality of task recommendation icons and sequentially display the plurality of task recommendation icons according to the changed priority levels on the touch screen 190. For example, the controller 110 may exchange the priority level of the touched task recommendation icon with the priority level of the next lower task recommendation icon. As illustrated in FIG. 6D, the controller 110 may exchange the priority level '4' of the fourth task recommendation icon 340 with the priority level '2' of the second task recommendation icon 320 and thus may display the fourth task recommendation icon 340 in the second place and the second task recommendation icon 320 in the fourth place on the touch screen 190. Alternatively, the controller 110 may change the priority level of the touched task recommendation icon to the priority level of the next lower task recommendation icon and thus may decrease the next and second-next lower priority levels of task recommendation icons by 1. For example, if a priority changing gesture is made by touching the fourth task recommendation icon 340 as illustrated in FIG. 6B and then dragging the touch over the second task recommendation icon 320 as illustrated in FIG. 6C, the controller 110 may change the priority levels of the fourth, second, and third task recommendation icons 340, 320, and 330 to '2', '3', and '4', respectively.

As described above, exemplary embodiments of the present invention are advantageous in that a user can change the priority levels of a plurality of task recommendation icons displayed sequentially according to their priority levels based on user log information. If the user wants to execute a specific task recommendation icon irrespective of the priority levels based on the user log information, he or she may make a priority changing gesture to thereby freely change the priority levels of the plurality of task recommendation icons.

Referring back to FIG. 4, at least one of the at least one task recommendation icon is selected in step S170. The controller 110 may detect selection of at least one of the at least one task recommendation icon. The controller 110 may detect selection of the at least one of the at least one task recommendation icon by sensing a touch on the at least one of the at least one task recommendation icon. Referring to FIGS. 5A to 5D again, the controller 110 may detect selection of the first task recommendation icon 310 by sensing a touch on the first task recommendation icon 310 among the first to fourth task recommendation icons 310 to 340.

The controller 110 executes the at least one task corresponding to the selected at least one task recommendation icon in step S180. The controller 110 may execute the at least one task corresponding to the at least one task recommendation icon selected in step S170 in the mobile device 100. For example, the controller 110 may detect selection of the first task recommendation icon 310 representing the first recommendation task being 'phone application execution' for the at least one object 'Amanda Kim' in step S170, as illustrated in FIG. 5C. In step S180, the controller 110 may execute the first recommendation task being 'phone application execution' for the at least one object 'Amanda Kim' as illustrated in FIG. 5D. The phone number 212 of 'Amanda Kim' (e.g. 010-9111-1111 in FIG. 5D) is pre-stored in the memory 175. The controller 110 may extract the phone number 212 of 'Amanda Kim' from the memory 175. Then the controller 110 may dial the phone number 212 of 'Amanda Kim' by executing a phone application 300.

According to an exemplary embodiment of the present invention, a task recommendation icon corresponding to content displayed on the touch screen can be executed. In the related art, an icon representing a recommended application is displayed so that only the application can be executed. In contrast, according to exemplary embodiments of the present invention, at least one object, for example, the name, phone number, and the like of a person can be extracted from displayed content and a task recommendation icon representing at least one action for the extracted at least one object can be displayed on the touch screen. As a result, the user can execute at least one action for the at least one object by selecting the at least one task recommendation icon. According to exemplary embodiments of the present invention, an object and action related to content displayed on the touch screen can be extracted based on user log information and a task recommendation icon can be generated and displayed using the object and action, rather than an icon representing a recommended application is simply displayed. The user can execute an action corresponding to the task recommendation icon by selecting the task recommendation icon. Accordingly, the user can execute the action regarding the object related to the content displayed on the touch screen, just by selecting the task recommendation icon.

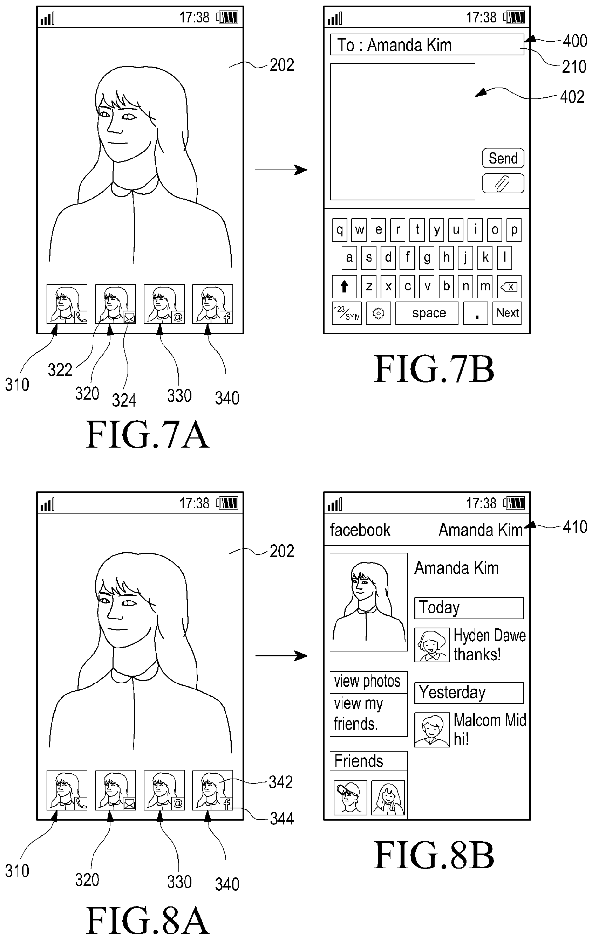

FIGS. 7A and 7B illustrate screens showing an exemplary operation for generating and displaying task recommendation icons task recommendation icons in a mobile device according to an exemplary embodiment of the present invention.

Referring to FIGs. 7A-7D, the controller 110 displays the content 202 corresponding to an image on the touch screen 190 according to an exemplary embodiment of the present invention. For example, a gallery application is being executed in the mobile device 100. The controller 110 may extract at least one object such as the name, phone number, email address, and ID of a person appearing in the image 202 from the image 202. For example, the controller 110 may extract at least one object such as a name 'Amanda Kim', or the phone number, email address, or ID of 'Amanda Kim' from the image 202. The controller 110 may extract 'phone application execution', 'message application execution', 'email application execution', and 'SNS application execution' as at least one action for the at least one object such as the name 'Amanda Kim' based on user log information stored in the memory 175.

The controller 110 may generate at least recommendation task for the at least one object and the at least one action. For example, the controller 110 may generate 'phone application execution', 'message application execution', 'email application execution', and 'SNS application execution' corresponding to the at least one action for the at least one object 'Amanda Kim', as the at least one recommendation task.

The controller 110 may generate at least one task recommendation icon representing the at least one recommendation task. For example, the controller 110 may generate the first task recommendation icon 310 including a part of the image 202 and an icon image representing the phone application. The controller 110 may generate the second task recommendation icon 320 including a part 322 of the image 202 and an icon image 324 representing the message application. The controller 110 may generate the third task recommendation icon 330 including the part of the image 202 and an icon image representing the email application. In addition, the controller 110 may generate the fourth task recommendation icon 340 including the part of the image 202 and an icon image representing the SNS application.

The controller 110 may display the at least one task recommendation icon on the touch screen 190. For example, the controller 110 may display the first to fourth task recommendation icons 310 to 340 on the touch screen 190, as illustrated in FIG. 7A. The controller 110 may detect selection of at least one of the at least one task recommendation icon. For example, the controller 110 may detect selection of the second task recommendation icon 320 as illustrated in FIG. 7A. The controller 110 may execute the at least one recommendation task corresponding to the selected at least one task. For example, the controller 110 may execute the message application for 'Amanda Kim', which is the recommendation task corresponding to the second recommendation icon 320 as illustrated in FIG. 7B. The memory 175 may pre-store the phone number of the at least one object 'Amanda Kim'. The controller 110 may extract the phone number of Amanda Kim from the memory 175 and execute the message application to the phone number of Amanda Kim. Referring to FIG. 7B, for example, the controller 110 may execute the message application and may directly input Amanda Kim 210 into a recipient input window 400. According to a first exemplary embodiment of the present invention, the user can advantageously transmit a message to Amanda Kim without inputting the recipient. The user can transmit a message to Amanda Kim just by inputting a message into a message window 402 without inputting the recipient.

FIGS. 8A and 8B illustrate screens showing an exemplary operation for generating and displaying task recommendation icons in a mobile device according to an exemplary embodiment of the present invention.

Referring to FIGS. 8A and 8B, the controller 110 of the mobile device 100 displays the content 202 corresponding to an image on the touch screen 190 according to an exemplary embodiment of the present invention. For example, a gallery application is being executed in the mobile device 100. The controller 110 may extract at least one object, such as the name, phone number, email address, and ID of a person appearing in the image 202 from the image 202. For example, the controller 110 may extract at least one object such as a name 'Amanda Kim', or the phone number, email address, or ID of 'Amanda Kim' from the image 202. The controller 110 may extract 'phone application execution', 'message application execution', 'email application execution', and 'SNS application execution' as at least one action for the at least one object such as the name 'Amanda Kim' based on user log information stored in the memory 175.

The controller 110 may generate at least one recommendation task for the at least one object and the at least one action. For example, the controller 110 may generate 'phone application execution', 'message application execution', 'email application execution', and 'SNS application execution' corresponding to the at least one action for the at least one object 'Amanda Kim', as the at least one recommendation task. The controller 110 may generate at least one task recommendation icon representing the at least one recommendation task. For example, the controller 110 may generate the first task recommendation icon 310 including a part of the image 202 and an icon image representing the phone application. The controller 110 may generate the second task recommendation icon 320 including the part of the image 202 and an icon image representing the message application. The controller 110 may generate the third task recommendation icon 330 including the part of the image 202 and an icon image representing the email application. In addition, the controller 110 may generate the fourth task recommendation icon 340 including a part 342 of the image 202 and an icon image 344 representing the SNS application. The controller 110 may display the at least one task recommendation icon on the touch screen 190. For example, the controller 110 may display the first to fourth task recommendation icons 310 to 340 on the touch screen 190, as illustrated in FIG. 8A. The controller 110 may detect selection of at least one of the at least one task recommendation icon. For example, the controller 110 may detect selection of the fourth task recommendation icon 340 in the illustrated case of FIG. 8A. The controller 110 may execute the at least one recommendation task corresponding to the selected at least one task recommendation icon. For example, the controller 110 may execute the SNS application for 'Amanda Kim', which is the recommendation task corresponding to the fourth recommendation icon 340, as illustrated in FIG. 8B. The memory 175 may pre-store the SNS ID of the at least one object 'Amanda Kim'. The controller 110 may extract the 'SNS ID' of Amanda Kim 410 from the memory 175 and execute the SNS application. Referring to FIG. 8B, for example, the controller 110 may execute the SNS application directly to the 'SNS ID' of Amanda Kim. An SNS screen of Amanda Kim 410 may be displayed immediately as illustrated in FIG. 8B. According to an exemplary embodiment of the present invention, the user can advantageously execute the SNS application to the SNS ID without inputting the SNS ID.

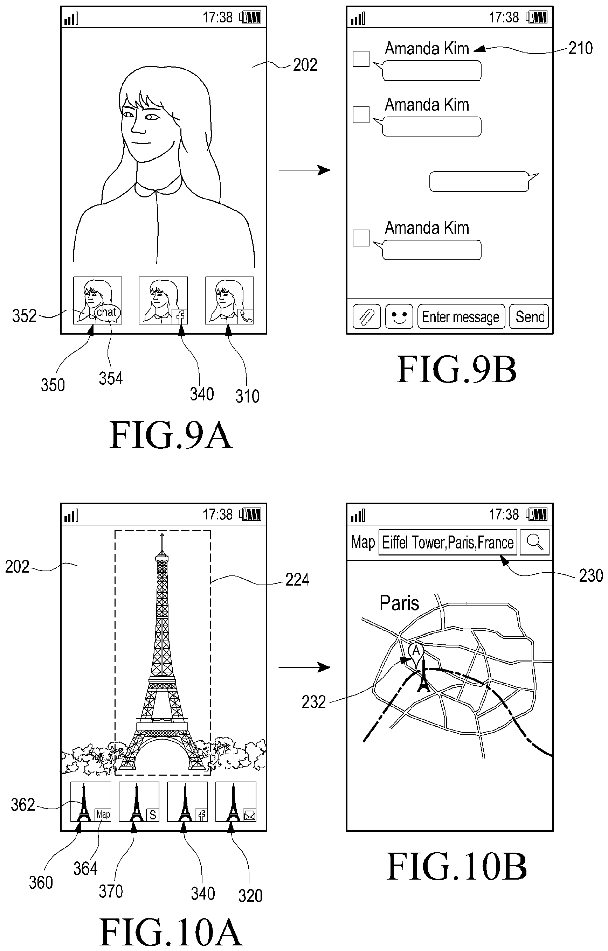

FIGS. 9A and 9B illustrate screens of a mobile device on which task recommendation icons are generated and displayed according to an exemplary embodiment of the present invention.

Referring to FIG. 9A, the controller 110 displays the content 202 corresponding to an image on the touch screen 190. For example, a gallery application is being executed in the mobile device 100. The controller 110 may extract at least one object such as the name, phone number, email address, and ID of a person appearing in the image 202 from the image 202. For example, the controller 110 may extract at least one object such as a name 'Amanda Kim', or the phone number, email address, or ID of 'Amanda Kim' from the image 202. The controller 110 may extract 'phone application execution', 'message application execution', 'email application execution', and 'SNS application execution' as at least one action for the at least one object such as the name 'Amanda Kim' based on user log information stored in the memory 175.

The controller 110 may generate at least one recommendation task for the at least one object and the at least one action. For example, the controller 110 may generate 'messenger application execution', 'SNS application execution', and 'phone application execution' corresponding to the at least one action for the at least one object 'Amanda Kim', as the at least one recommendation task. The controller 110 may generate at least one task recommendation icon representing the at least one recommendation task. For example, the controller 110 may generate a fifth task recommendation icon 350 including a part 352 of the image 202 and an icon image 352 representing the messenger application. The controller 110 may generate the fourth task recommendation icon 340 including a part of the image 202 and an icon image representing the SNS application. The controller 110 may generate the first task recommendation icon 310 including the part of the image 202 and an icon image representing the phone application. The controller 110 may display the at least one task recommendation icon on the touch screen 190. For example, the controller 110 may display the fifth, fourth, and first task recommendation icons 350, 340 and 310 on the touch screen 190, as illustrated in FIG. 9A.

The controller 110 may detect selection of at least one of the at least one task recommendation icon. For example, the controller 110 may detect selection of the fifth task recommendation icon 350 in the illustrated case of FIG. 9A. The controller 110 may execute the at least one recommendation task corresponding to the selected at least one task. For example, the controller 110 may execute the messenger application for 'Amanda Kim', which is the recommendation task corresponding to the fifth recommendation icon 350 as illustrated in FIG. 9B. The memory 175 may pre-store the phone number or messenger ID of the at least one object 'Amanda Kim'. The controller 110 may extract the phone number or messenger ID of Amanda Kim 210 from the memory 175 and execute the messenger application to the phone number or messenger ID of Amanda Kim 210.

Referring to FIG. 9B, for example, the controller 110 may execute the messenger application directly to the phone number or messenger ID of Amanda Kim 210. A messenger screen of Amanda Kim 210 may be displayed immediately as illustrated in FIG. 9B. According to an exemplary embodiment of the present invention, the user can advantageously execute the messenger application for Amanda Kim without inputting the phone number or messenger ID. In addition, the user can transmit a message to Amanda Kim just by inputting the message into a messenger input window without inputting the phone number or messenger ID of the recipient.

FIGS. 10A and 10B illustrate screens showing an exemplary operation for generating and displaying task recommendation icons in a mobile device according to an exemplary embodiment of the present invention.

Referring to FIG. 10A, the controller 110 displays the content 202 corresponding to an image on the touch screen 190. For example, a gallery application is being executed in the mobile device 100. The controller 110 may extract at least one object such as a place name, an address, a location, or a shop name of the image 202 from the image 202. For example, the controller 110 may extract at least one object such as a place name 'Eiffel Tower', the address of the Eiffel Tower, or the location of the Eiffel Tower from the image 202. The controller 110 may extract the at least one object from the content through the Internet. The controller 110 may execute an Internet application, access a search site, input the content into the search site, search for the content, and extract the at least one object from the content using search results. For example, the controller 110 may extract at least one object such as a place name 'Eiffel Tower', the address of the Eiffel Tower, or the location of the Eiffel Tower from the image 202 illustrated in FIG. 10A. Then the controller 110 may extract 'map application execution', 'search application execution', 'SNS application execution', and 'message application execution' as the at least one action corresponding to the at least one object such as the place name 'Eiffel Tower', the address of the Eiffel Tower, or the location of the Eiffel Tower based on user log information pre-stored in the memory 175.

The controller 110 may generate at least one recommendation task for the at least one object and the at least one action. For example, the controller 110 may generate, as the at least one recommendation task, 'map application execution', 'search application execution', 'SNS application execution', and 'message application execution' corresponding to the at least one action for the at least one object 'Eiffel Tower'. The controller 110 may generate at least one task recommendation icon representing the at least one recommendation task. For example, the controller 110 may generate a sixth task recommendation icon 360 including a part 362 of the image 202 and an icon image 364 representing the map application. The controller 110 may generate a seventh task recommendation icon 370 including the part of the image 202 and an icon image representing the search application. The controller 110 may generate the fourth task recommendation icon 340 including a part 224 of the image 202 and an icon image representing the SNS application. The controller 110 may generate the second task recommendation icon 320 including the part of the image 202 and an icon image representing the message application.

The controller 110 may display the at least one task recommendation icon on the touch screen 190. For example, the controller 110 may display the sixth, seventh, fourth, and second task recommendation icons 360, 370, 340, and 320 on the touch screen 190, as illustrated in FIG. 10A. Then the controller 110 may detect selection of at least one of the at least one task recommendation icon. For example, the controller 110 may detect selection of the sixth task recommendation icon 360 in the illustrated case of FIG. 10A. The controller 110 may execute the at least one recommendation task corresponding to the selected at least one task recommendation icon.

For example, the controller 110 may execute the map application regarding 'Eiffel Tower', which is the recommendation task corresponding to the sixth recommendation icon 360 as illustrated in FIG. 10B. The memory 175 may pre-store the place name 'Eiffel Tower', or the address or location of the Eiffel Tower. The controller 110 may extract the place name, address, or location of the Eiffel Tower from the memory 175 and execute the map application based on the place name, address or location of the Eiffel Tower. Referring to FIG. 10B, for example, the controller 110 may execute the map application. The controller 110 may directly input the place name, address, or location 230 of the Eiffel Tower into an input window of the map application. Then a map screen of the Eiffel Tower 232 may be displayed immediately as illustrated in FIG. 10B. According to an exemplary embodiment of the present invention, the user can advantageously execute the map application for an intended place name, address or location without inputting the place name, address or location.

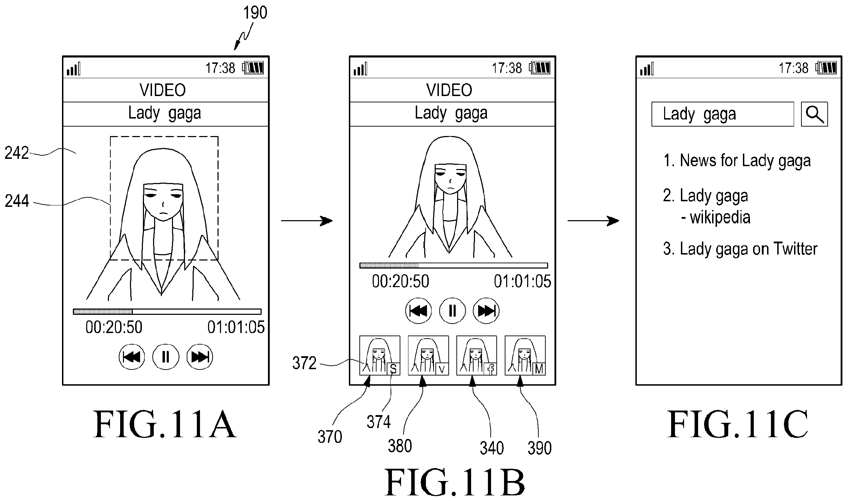

FIGS. 11A to 11C illustrate screens showing an exemplary operation for generating and displaying task recommendation icons in a mobile device according to an exemplary embodiment of the present invention.

Referring to FIG. 11A, the controller 110 displays content 242 corresponding to a video on the touch screen 190 in an exemplary embodiment of the present invention. For example, a video application is being executed in the mobile device 100. The controller 110 may extract at least one object such as the name of a person appearing in the video 242 from the video 242. For example, the controller 110 may extract the name of a person such as 'Lady gaga' from the video 242. The controller 110 may extract 'search application execution', 'video recommendation application execution', 'SNS application execution', and 'music recommendation application execution' as at least one action for the at least one object such as the name 'Lady gaga' based on user log information pre-stored in the memory 175.

The controller 110 may generate at least one recommendation task for the at least one object and the at least one action. For example, the controller 110 may generate, as the at least one recommendation task, 'search application execution', 'video recommendation application execution', 'SNS application execution', and 'music recommendation application execution' corresponding to the at least one action for the at least one object 'Lady gaga'. The controller 110 may generate at least one task recommendation icon representing the at least one recommendation task. For example, the controller 110 may generate the seventh task recommendation icon 370 including a part 372 of the video 242 and an icon image 374 representing the search application. The controller 110 may generate an eighth task recommendation icon 380 including the part of the video 244 and an icon image representing the video recommendation application. The controller 110 may generate the fourth task recommendation icon 340 including the part of the video 242 and an icon image representing the SNS application. The controller 110 may generate a ninth task recommendation icon 390 including the part of the video 242 and an icon image representing the music recommendation application.

Subsequently, the controller 110 may display the at least one task recommendation icon on the touch screen 190. For example, the controller 110 may display the seventh, eighth, fourth, and ninth task recommendation icons 370, 380, 340, and 390 on the touch screen 190, as illustrated in FIG. 11B. The controller 110 may detect selection of at least one of the at least one task recommendation icon. For example, the controller 110 may detect selection of the seventh task recommendation icon 370 in the illustrated case of FIG. 11B. The controller 110 may execute the at least one recommendation task corresponding to the selected at least one task recommendation icon. For example, the controller 110 may execute the search application for 'Lady gaga', which is the recommendation task corresponding to the seventh task recommendation icon 370 as illustrated in FIG. 11C. The controller 110 may execute the search application. The controller 110 may input Lady gaga directly into a search window in the search application. Then a search screen for Lady gaga may be displayed immediately as illustrated in FIG. 11C. According to an exemplary embodiment of the present invention, the user can advantageously execute the search application with an intended search keyword without inputting the search keyword.

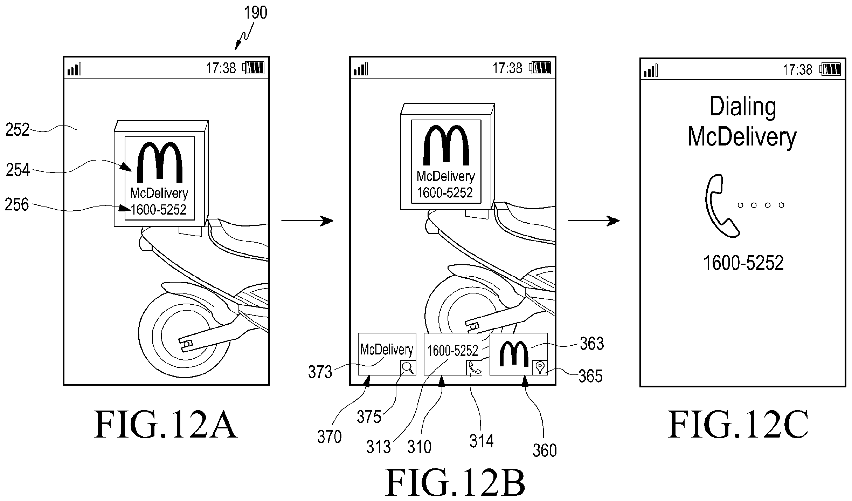

FIGS. 12A to 12C illustrate screens showing an exemplary operation for generating and displaying task recommendation icons in a mobile device according to an exemplary embodiment of the present invention.

Referring to FIG. 12A, the controller 110 displays content 252 including an image 254 and text 256 on the touch screen 190 according to an exemplary embodiment of the present invention. For example, a gallery application is being executed in the mobile device 100. The controller 110 extracts at least one object such as a shop name or a phone number from the content 252. For example, the controller 110 may extract at least one object such as a shop name 'McDelivery' or 'M' and a phone number '1600-5252' from the content 252 including the image 254 and the text 256. The controller 110 may extract the at least one object from the content 252 by OCR.

Subsequently, the controller 110 may extract, as at least one action for the at least one object such as the shop name 'McDelivery' or 'M' and the phone number '1600-5252', 'search application', 'phone application', and 'map application' based on user log information pre-stored in the memory 175. The controller 110 may generate at least one recommendation task for the at least one object and the at least one action. For example, the controller 110 may generate, as the at least one recommendation task, 'search application execution' for the shop name 'McDelivery', 'phone application execution' for the phone number '1600-5252', and 'search application execution' for the shop name M.

The controller 110 may generate at least one task recommendation icon representing the at least one recommendation task. For example, the controller 110 may generate the seventh task recommendation icon 370 including a part 373 of the text 256 and an icon image 375 representing the search application. In addition, the controller 110 may generate the first task recommendation icon 310 including a part 313 of the text 256 and an icon image 314 representing the phone application. The controller 110 may generate the sixth task recommendation icon 360 including a part 363 of the image 254 and an icon image 365 representing the search application. The controller 110 may display the at least one task recommendation icon on the touch screen 190. For example, the controller 110 may display the seventh, first, and sixth task recommendation icons 370, 310 and 360 on the touch screen 190, as illustrated in FIG. 12B. The controller 110 may detect selection of at least one of the at least one task recommendation icon. For example, the controller 110 may detect selection of the first task recommendation icon 310 in the illustrated case of FIG. 12B. The controller 110 may execute the at least one recommendation task corresponding to the selected at least one task recommendation icon. For example, the controller 110 may execute the phone application at the phone number '1600-5252', which is the recommendation task corresponding to the first task recommendation icon 310. Accordingly, the user can advantageously execute the phone application at an intended phone number without inputting the phone number according to the sixth example of the present invention.

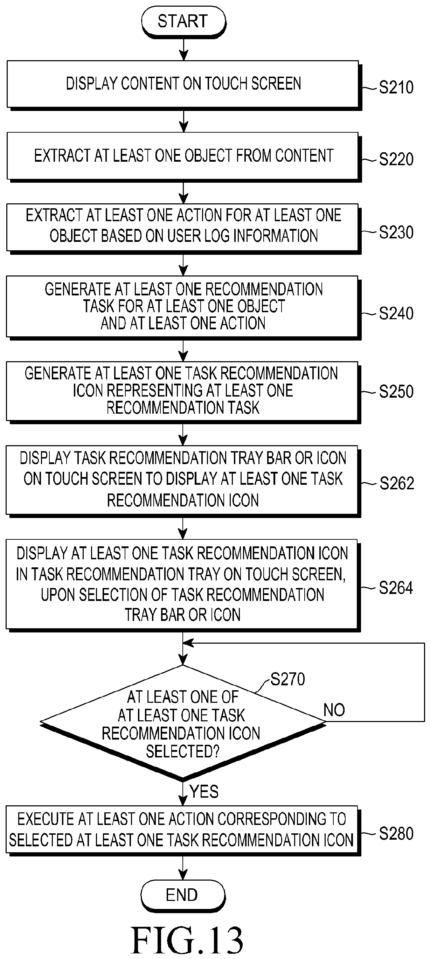

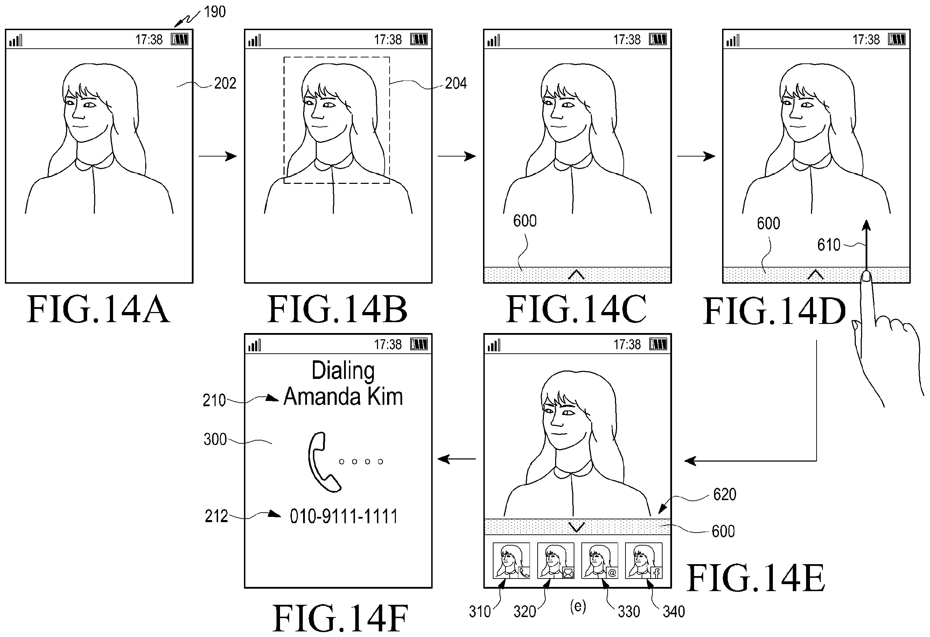

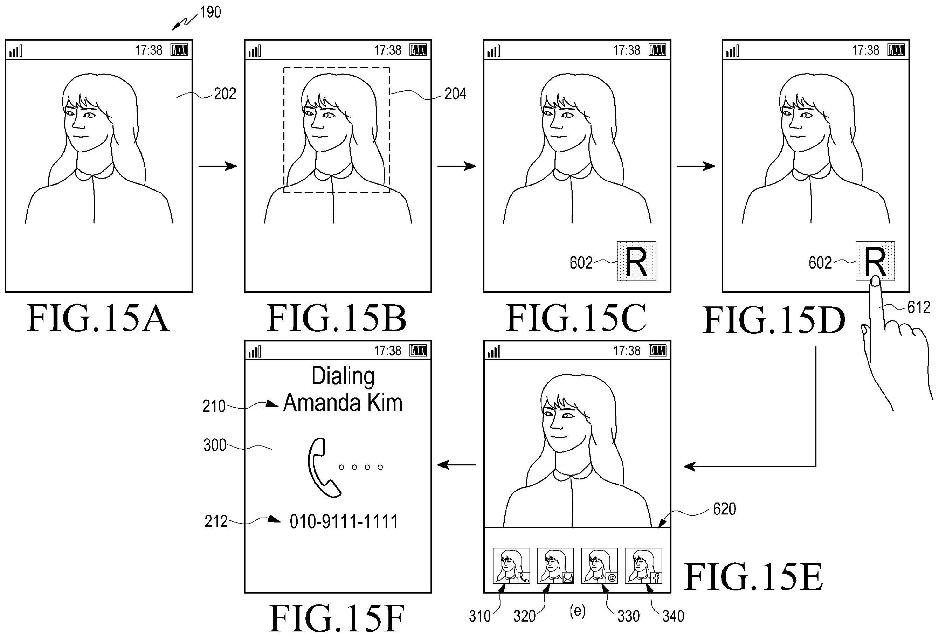

FIG. 13 is a flowchart illustrating a method for generating a task recommendation icon in the mobile device according to an exemplary embodiment of the present invention and FIGS. 14A to 14E and 15A to 15E illustrate screens showing an operation for generating and displaying task recommendation icons in a mobile device according to an exemplary embodiment of the present invention.

Referring to FIG. 13, steps S210 through S280 of FIG. 13 are the same as steps S110 through S180 of FIG. 4 except for steps S262 and S264. For convenience' sake of description, steps S210 through S280 will be described briefly.

Referring to FIGS. 13, 14A to 14E and 15A to 15E, the controller 110 of the mobile device 100 displays content on the touch screen 190 in step S210. The controller 110 displays content on a screen of the touch screen 190 in the mobile device 100. The content may include at least one of an image, a video, or text. For example, referring to FIG. 14A, the content 202 including an image is displayed on the touch screen 190. A gallery application, for example, is being executed in the mobile device 100. The controller 110 may display the content 202 including the image on the touch screen 190, while executing the gallery application, as illustrated in FIG. 14A.

The controller 110 extracts at least one object from the content in step S220. The at least one object may include at least one of a name, an ID, a place name, an address, a phone number, a position, and a shop name. For example, the controller 110 may extract the at least one object such as a name from the content. Referring to FIG. 14B, the controller 110 may extract the at least one object such as the name of a person from the content 202 including the image. The memory 175 may pre-store at least one data about at least one person, for instance, a facial image, phone number, email address, or ID of the person in a contact list. The controller 110 may extract at least one of a phone number, email address, address, and SNS ID of the person as well as the name of the person appearing in the content 202, for example, 'Amanda Kim' from the memory 175.

The controller 110 extracts at least one action for the at least one object based on user log information in step S230. The at least one action refers to a specific execution under the control of the controller 110 in the mobile device 100. The user log information specifies a use pattern including execution information about the at least one action. The execution information may specify at least one of the number of executions, an execution time, and an execution order regarding the at least one action. The memory 175 may pre-store at least one action for the at least one object based on the user log information being the use pattern of the user. The controller 110 may extract from the memory 175, as the at least one action for the at least one object such as the name 'Amanda Kim', 'phone application execution', 'message application execution', 'email application execution', and 'SNS application execution'.

The controller 110 generates at least one recommendation task for the at least one object and the at least one action in step S240. The at least one recommendation task refers to execution of the at least one action for the at least one object. The controller 110 generates the at least one task that executes the at least one action extracted in step S230 for the at least one object. For example, the controller 110 may generate 'phone application execution', 'message application execution' 'email application execution', and 'SNS application execution' as first to fourth recommendation tasks for the at least one object 'Amanda Kim'.

The controller 110 generates at least one task recommendation icon representing the at least one recommendation task in step S250. The at least one task recommendation icon may include a part of the content and a symbol representing the at least one action. The content includes at least one of an image, a video, and text. The symbol representing the at least one action may be an icon image representing an application that executes the at least one action. For example, the controller 110 may generate the first task recommendation icon 310 including a part of the image and an icon image representing the phone application. The controller 110 may generate the second task recommendation icon 320 including the content part and an icon image representing the message application. The controller 110 may generate the third task recommendation icon 330 including the content part and an icon image representing the email application. The controller 110 may generate the fourth task recommendation icon 340 including the content part and an icon image representing the SNS application.

The controller 110 displays a task recommendation tray bar 600 or icon on the touch screen 190 in order to display the at least one task recommendation icon in step S262. The task recommendation tray bar 600 may reside within the screen of the touch screen 190 or at an edge of the screen of the touch screen 190. Referring to FIG. 14C, the controller 110 may display the task recommendation tray bar 600 at the bottom of the touch screen 190. The user may expect that the at least one task recommendation icon will be recommended, recognizing the task recommendation tray bar. Alternatively, the controller 110 may display the task recommendation tray bar 600 within the screen of the touch screen 190. For example, the controller 110 may display a task recommendation tray icon 602 within the screen of the touch screen 190 as illustrated in FIG. 15C. Thus the user may expect that the at least one task recommendation icon will be recommended, recognizing the task recommendation tray icon 602. As a task recommendation tray bar 600 or icon is displayed on the touch screen in order to display the at least one task recommendation icon, the user may expect that the at least one task recommendation icon will be recommended.

Upon detection of selection of the task recommendation tray bar or icon, the controller 110 displays the at least one task recommendation icon included in the task recommendation tray on the touch screen 190 in step S264. The controller 110 may detect selection of the task recommendation tray bar or icon. The task recommendation tray bar or icon may be selected by a user's touch. For instance, the user may touch the task recommendation tray bar and drag the touch in an arrowed direction 610, as illustrated in FIG. 14D. If the task recommendation tray bar is displayed at an edge of the touch screen 190, the drag may be directed toward the inside of the touch screen 190. Alternatively, the task recommendation tray bar 600 may be selected by a gesture of touching the task recommendation tray bar 600, as indicated by reference numeral 612 in FIG. 15D.

Upon detection of selection of the task recommendation tray bar or icon, the controller 110 displays the at least one task recommendation icon included in the task recommendation tray 620 on the touch screen 190. The controller 110 may display the at least one task recommendation icon generated in step S250 in the task recommendation tray 620 on the touch screen 190. Referring to FIGS. 14E and 15E, the controller 110 may display, in the task recommendation tray 600 on the touch screen 190, the first to fourth task recommendation icons 310 to 340 generated in step S250 corresponding to the first to fourth recommendation tasks for the at least one object 'Amanda Kim', which are respectively 'phone application execution', 'message application execution', 'email application execution', and 'SNS application execution'. Additionally, upon detection of a closing gesture for the task recommendation tray bar, the controller 110 may remove the task recommendation tray 620 from the touch screen 190. For example, the closing gesture for the task recommendation tray bar may be a gesture of touching the task recommendation tray bar and then dragging the touch. If the task recommendation tray bar is located at an edge of the touch screen 190, the drag may be directed toward the edge of the touch screen 190. According to an exemplary embodiment of the present invention, when the task recommendation tray bar or icon is selected with the at least one task recommendation icon hidden from the touch screen 190, the at least one task recommendation icon appears. The user can view the hidden task recommendation icon by selecting the task recommendation tray bar or icon. Since the at least one task recommendation icon can be hidden when not needed, the space of the touch screen 190 can be efficiently used.

At least one of the at least one task recommendation icon is selected in step S270. The controller 110 may detect selection of at least one of the at least one task recommendation icon. The controller 110 may detect selection of the at least one of the at least one task recommendation icon by sensing a touch on the at least one of the at least one task recommendation icon. Referring to FIGS. 14E and 15E, the controller 110 may detect selection of the first task recommendation icon 310 by sensing a touch on the first task recommendation icon 310 among the first to fourth task recommendation icons 310 to 340.

Subsequently, the controller 110 executes the at least one task corresponding to the selected at least one task recommendation icon in step S280. The controller 110 may execute the at least one task corresponding to the at least one task recommendation icon selected in step S270 in the mobile device 100. For example, the controller 110 may detect selection of the first task recommendation icon 310 representing the first recommendation task being 'phone application execution' for the at least one object 'Amanda Kim' in step S270, as illustrated in FIGS. 14E and 15E. The controller 110 may execute the first recommendation task being 'phone application execution' for the at least one object 'Amanda Kim' as illustrated in FIGS. 14F and 15F. The phone number 212 of 'Amanda Kim' (e.g. 010-9111-1111 in FIGS. 14F and 15F) is pre-stored in the memory 175. The controller 110 may extract the phone number of 'Amanda Kim' from the memory 175. The controller 110 may dial the phone number 212 of 'Amanda Kim' by executing the phone application 300.

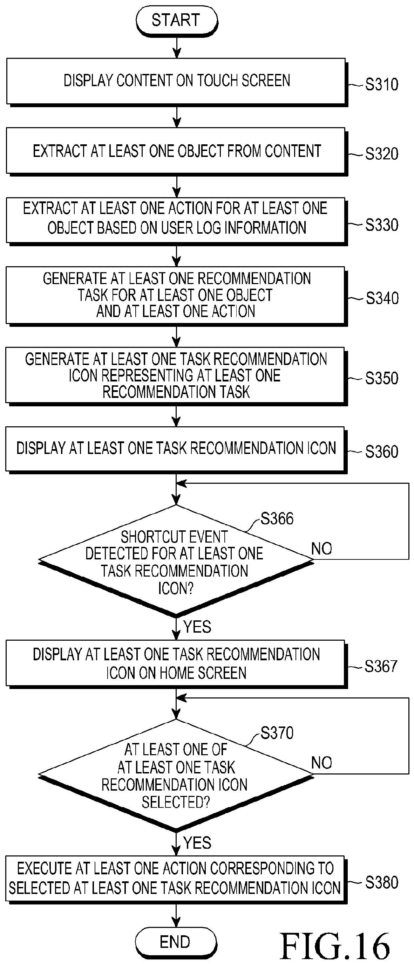

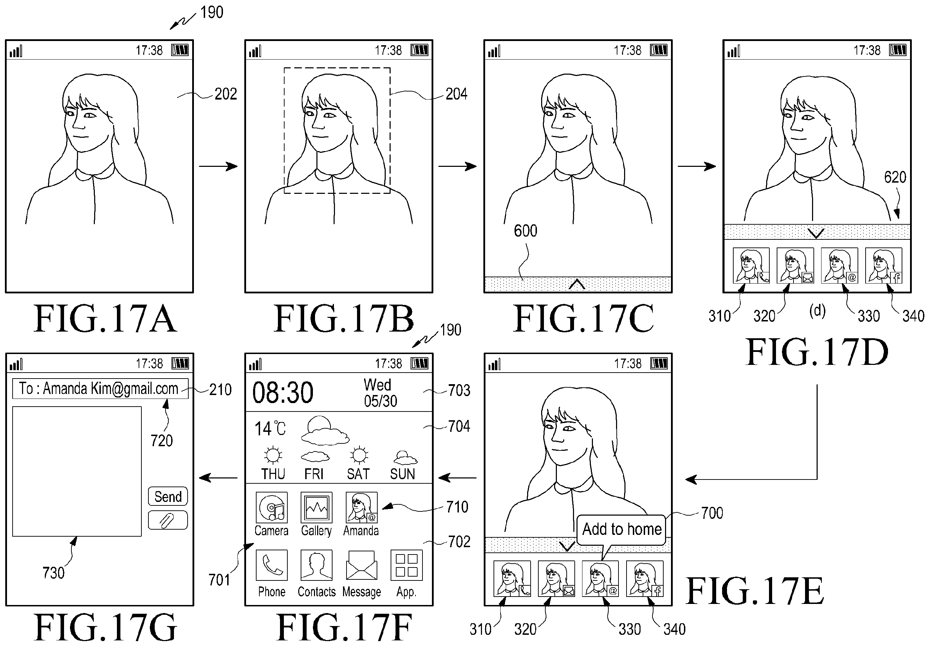

FIG. 16 is a flowchart illustrating a method for generating a task recommendation icon in a mobile device according to an exemplary embodiment of the present invention and FIGS. 17A to 17F illustrate screens showing an operation for generating and displaying task recommendation icons in a mobile device according to an exemplary embodiment of the present invention.

Referring to FIG. 16, steps S310 through S380 of FIG. 16 are the same as steps S110 through S180 of FIG. 4 except for steps S366 and S367. For convenience' sake of description, steps S310 through S380 will be described briefly.

The controller 110 displays content on the touch screen 190 in step S310. The controller 110 displays content on a screen of the touch screen 190 in the mobile device 100. The content may include at least one of an image, a video, or text. For example, referring to FIG. 17A, the content 202 including an image is displayed on the touch screen 190. A gallery application, for example, is being executed in the mobile device 100. The controller 110 may display the content 202 including the image on the touch screen 190, while executing the gallery application, as illustrated in FIG. 17A.

The controller 110 extracts at least one object from the content in step S320. The at least one object may include at least one of a name, an ID, a place name, an address, a phone number, a position, and a shop name. For example, the controller 110 may extract the at least one object such as a name from the content like an image. Referring to FIG. 17B, the controller 110 may extract the at least one object such as the name of a person from the content 202 including the image. The memory 175 may pre-store at least one data about at least one person, for instance, a facial image, phone number, email address, or ID of the person in a contact list. The controller 110 may extract at least one of a phone number, email address, address, and SNS ID of the person as well as the name of the person appearing in the content 202, for example, 'Amanda Kim' from the memory 175.

The controller 110 extracts at least one action for the at least one object based on user log information in step S330. The at least one action refers to a specific execution under the control of the controller 110 in the mobile device 100. The user log information specifies a use pattern including execution information about the at least one action. The execution information may specify at least one of the number of executions, an execution time, and an execution order regarding the at least one action. The memory 175 may pre-store at least one action for the at least one object based on the user log information being the use pattern of the user. The controller 110 may extract from the memory 175, as the at least one action for the at least one object such as the name 'Amanda Kim', 'phone application execution', 'message application execution', 'email application execution', and 'SNS application execution'.

The controller 110 generates at least one recommendation task for the at least one object and the at least one action in step S340. The at least one recommendation task refers to execution of the at least one action for the at least one object. The controller 110 generates the at least one recommendation task that executes the at least one action extracted in step S230 for the at least one object. For example, the controller 110 may generate 'phone application execution', 'message application execution' 'email application execution', and 'SNS application execution' as first to fourth recommendation tasks for the at least one object 'Amanda Kim'.

The controller 110 generates at least one task recommendation icon representing the at least one recommendation task in step S350. The at least one task recommendation icon may include a part of the content and a symbol representing the at least one action. The content includes at least one of an image, a video, and text. The symbol representing the at least one action may be an icon image representing an application that executes the at least one action. For example, the controller 110 may generate the first task recommendation icon 310 including a part of the image and an icon image representing the phone application. The controller 110 may generate the second task recommendation icon 320 including the content part and an icon image representing the message application. The controller 110 may generate the third task recommendation icon 330 including the content part and an icon image representing the email application. The controller 110 may generate the fourth task recommendation icon 340 including the content part and an icon image representing the SNS application.

The controller 110 displays a task recommendation tray bar or icon on the touch screen 190 in order to display the at least one task recommendation icon. Referring to FIG. 17C, the controller 110 may display the task recommendation tray bar 600 at the bottom of the touch screen 190. Alternatively, the controller 110 may display the task recommendation tray bar 600 within the screen of the touch screen 190.

Upon detection of selection of the task recommendation tray bar 600 or icon, the controller 110 displays the at least one task recommendation icon included in a task recommendation tray on the touch screen. The controller 110 may detect selection of the task recommendation tray bar 600 or icon. The task recommendation tray bar or icon may be selected by a user's touch. Alternatively, the task recommendation tray bar may be selected by a gesture of touching the task recommendation tray bar 600 and dragging the touch. In addition, the task recommendation tray icon may be selected by a gesture of touching the task recommendation tray icon. Upon detection of selection of the task recommendation tray bar 600 or icon, the controller 110 displays the at least one task recommendation icon in the task recommendation tray 620 on the touch screen 190. The controller 110 may display the at least one task recommendation icon generated in step S350 in the task recommendation tray 620 on the touch screen 190. Referring to FIG. 17D, the controller 110 may display, in the task recommendation tray 620 on the touch screen 190, the first to fourth task recommendation icons 310 to 340 generated in step S350 corresponding to the first to fourth recommendation tasks for the at least one object 'Amanda Kim', which are respectively 'phone application execution', 'message application execution', 'email application execution', and 'SNS application execution'. According to an exemplary embodiment of the present invention, the displaying of the task recommendation try 600 and the displaying of the at least one task recommendation icon may be omitted.

The controller 110 detects a shortcut generation event for the at least one task recommendation icon in step S366. The shortcut generation event may be triggered by touching the at least one task recommendation icon. The touch may be a double tap or long touch on the at least one task recommendation icon. The controller 110 may detect the shortcut generation event corresponding to the double tap or long touch on the at least one task recommendation icon.

According to another exemplary embodiment of the present invention, upon detection of the shortcut generation event, the controller 110 may display a notification, instead of controlling the mobile device 100. Referring to FIG. 17E, for example, the controller 110 may display a notification 700 saying "Add to home".

Upon detection of the shortcut generation event, the controller 110 displays the task recommendation icon for which the shortcut generation event has been generated on a home screen in step S367. The controller 110 displays the task recommendation icon for which the shortcut generation event has been generated in step S366 on a home screen. For example, the controller 110 may detect generation of the shortcut generation event for the third task recommendation icon 330 in FIG. 17E. As illustrated in FIG. 17F, the controller 110 may display the third task recommendation icon 710 on the home screen. The home screen is the first screen displayed on the touch screen 190, when the mobile device 100 is powered on. If the mobile device 100 has a plurality of different home screens on a plurality of pages, a main home screen is the first screen displayed from among the different home screens. Shortcut icons 701 for executing frequently used applications, an application switching key 702, and widgets 703 and 704 for displaying time and weather may be displayed on the home screen.

The task recommendation icon is selected on the home screen in step S370. The controller 110 may detect selection of the task recommendation icon displayed on the home screen. The controller 110 may detect selection of the task recommendation icon displayed on the home screen by sensing a touch on the task recommendation icon. Referring to FIG. 17F, the controller 110 may detect selection of a task recommendation icon 710 being the third task recommendation icon 330 on the home screen.

The controller 110 executes the task corresponding to the selected task recommendation icon in step S380. For example, the controller 110 may execute the recommendation task being 'email application execution' corresponding to the task recommendation icon 710 displayed on the home screen as illustrated in FIG. 17G. The email address of 'Amanda Kim' may be pre-stored in the memory 175. The controller 110 may extract the email address of 'Amanda Kim' from the memory 175 and then may execute the email application to the email address of 'Amanda Kim'. Referring to FIG. 17G, the controller 170 may execute the email application. The controller 110 may directly input an email address 210 of Amada Kim into an input window 720 for inputting the email address of a recipient. Accordingly, the user can transmit an email to Amanda Kim without inputting the email address of the recipient. In addition, the user can transmit an email to Amanda Kim simply by inputting a message into a message window 730 without inputting the email address of the recipient.

According to an exemplary embodiment of the present invention, at least one task recommendation icon can be displayed on a home screen. Upon selection of the at least one task recommendation icon from the home screen, the at least one task recommendation icon can be executed immediately. Accordingly, the at least one task recommendation icon can execute the function of a shortcut icon. When the at least one task recommendation icon is selected from the home screen and executed immediately, at least one action can be executed immediately for the at least one object. Referring to FIG. 17F, when the user executes the at least one task recommendation icon by selecting it, he or she can transmit an email to Amanda Kim corresponding to the image illustrated in FIG. 17F. According to the related art, to transmit an email to Amanda Kim, the user should execute the email application and then input the email address of Amanda Kim into an email address input window. In contrast, according to an exemplary embodiment of the present invention, upon selection of the task recommendation icon 710 corresponding to the email application from the home screen as illustrated in FIG. 17F, the email application is executed with the email address of Amanda Kim input into the email address window, as illustrated in FIG. 17G. As the task recommendation icon 710 is generated based on user log information indicating frequent transmission of an email to Amanda Kim and displayed on the home screen, the user can send an email directly to Amanda Kim simply by selecting the task recommendation icon 710 on the home screen.

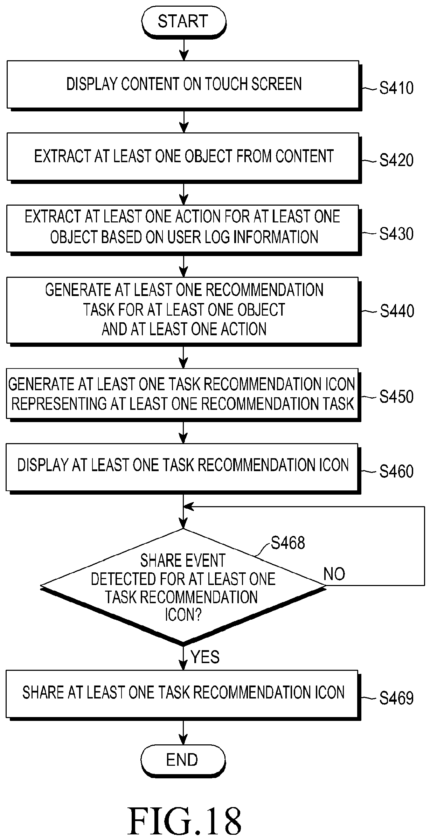

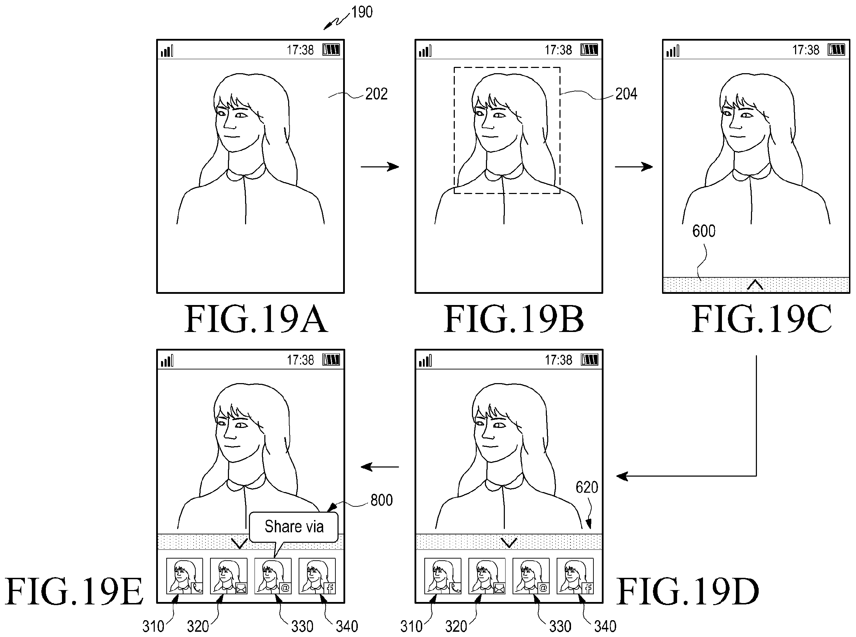

FIG. 18 is a flowchart illustrating a method for generating a task recommendation icon in the mobile device according to an exemplary embodiment of the present invention, and FIGS. 19A to 19E illustrate screens showing an operation for generating and displaying task recommendation icons in a mobile device according to an exemplary embodiment of the present invention.

Referring to FIG. 18, steps S410 through S460 are the same as steps S110 through S160 of FIG. 4. For convenience' sake of description, steps S410 through S460 will be described briefly.

Referring to FIGS. 18 and 19A to 19E, the controller 110 displays content on the touch screen 190 in step S410. The controller 110 displays content on a screen of the touch screen 190 in the mobile device 100. The content may include at least one of an image, a video, and text. For example, referring to FIG. 19A, the content 202 including an image is displayed on the touch screen 190. A gallery application, for example, is being executed in the mobile device 100. The controller 110 may display the content 202 including the image on the touch screen 190, while executing the gallery application, as illustrated in FIG. 19A.

The controller 110 extracts at least one object from the content in step S420. The at least one object may include at least one of a name, an ID, a place name, an address, a phone number, a position, and a shop name. For example, the controller 110 may extract the at least one object such as a name from the content like an image. As illustrated in FIG. 19B, the controller 110 may extract the at least one object such as the name of a person from the content 202 including the image. The memory 175 may pre-store at least one data about at least one person, for example, a facial image, phone number, email address, or ID of the person in a contact list. The controller 110 may extract at least one of a phone number, email address, address, and SNS ID of the person as well as the name of the person appearing in the content 202, for example, 'Amanda Kim' from the memory 175.

The controller 110 extracts at least one action for the at least one object based on user log information in step S430. The at least one action refers to a specific execution under the control of the controller 110 in the mobile device 100. The user log information specifies a use pattern including execution information about the at least one action. The execution information may specify at least one of the number of executions, an execution time, and an execution order regarding the at least one action. The memory 175 may pre-store at least one action corresponding to the at least one object based on the user log information being the use pattern of the user. The controller 110 may extract from the memory 175, as the at least one action corresponding to the at least one object such as the name 'Amanda Kim', 'phone application execution', 'message application execution', 'email application execution', and 'SNS application execution'.

The controller 110 generates at least one recommendation task for the at least one object and the at least one action in step S440. The at least one recommendation task refers to execution of the at least one action for the at least one object. The controller 110 generates the at least one recommendation task that executes the at least one action extracted in step S430 for the at least one object. For example, the controller 110 may generate 'phone application execution', 'message application execution' 'email application execution', and 'SNS application execution' as first to fourth recommendation tasks for the at least one object 'Amanda Kim'.

The controller 110 generates at least one task recommendation icon representing the at least one recommendation task in step S450. The at least one task recommendation icon may include a part of the content and a symbol representing the at least one action. The content includes at least one of an image, a video, and text. The symbol representing the at least one action may be an icon image representing an application that executes the at least one action. For example, the controller 110 may generate the first task recommendation icon 310 including a part of the image and an icon image representing the phone application. The controller 110 may generate the second task recommendation icon 320 including the content part and an icon image representing the message application. The controller 110 may generate the third task recommendation icon 330 including the content part and an icon image representing the email application. The controller 110 may generate a fourth task recommendation icon 340 including the content part and an icon image representing the SNS application.

The controller 110 displays a task recommendation tray bar or icon on the touch screen 190 in order to display the at least one task recommendation icon. Referring to FIG. 19C, the controller 110 may display the task recommendation tray bar 600 at the bottom of the touch screen 190. Alternatively, the controller 110 may display the task recommendation tray icon within the screen of the touch screen 190.

Upon detection of selection of the task recommendation tray bar 600 or icon, the controller 110 displays the at least one task recommendation icon in the task recommendation tray on the touch screen. The controller 110 may detect selection of the task recommendation tray bar 600 or icon. The task recommendation tray bar 600 or icon may be selected by a user's touch on the touch screen 190. For example, the task recommendation tray bar 600 may be selected by touching the task recommendation tray bar and dragging the touch. The task recommendation tray icon may be selected by touching the task recommendation tray icon. Upon detection of selection of the task recommendation tray bar or icon, the controller 110 displays the at least one task recommendation icon in the task recommendation tray 620 on the touch screen 190. The controller 110 may display the at least one task recommendation icon generated in step S450 in the task recommendation tray 620 on the touch screen 190. Referring to FIG. 19D, the controller 110 may display, in the task recommendation tray 620 on the touch screen 190, the first to fourth task recommendation icons 310 to 340 generated in step S450 corresponding to the first to fourth recommendation tasks for the at least one object 'Amanda Kim', which are respectively 'phone application execution', 'message application execution', 'email application execution', and 'SNS application execution'. According to an exemplary embodiment of the present invention, the displaying of the task recommendation bar 600 and the displaying of the at least one task recommendation icon may be omitted.

The controller 110 detects a share event for the at least one task recommendation icon in step S468. The share event may be triggered by touching the at least one task recommendation icon. The touch may be a double tap or long touch on the at least one task recommendation icon. The controller 110 may detect the share event corresponding to the double tap or long touch on the at least one task recommendation icon. Upon detection of the share event, the controller 110 may control the mobile device 100 in step S469. For example, the controller 110 may detect a share event corresponding to a touch on the third task recommendation icon 330 corresponding to the third recommendation task being 'email application execution' for the at least one object 'Amanda Kim' as illustrated in FIG. 19E.

According to another exemplary embodiment of the present invention, upon detection of the share event, the controller 110 may display a notification, instead of controlling the mobile device 100 in step S469. Referring to FIG. 19E, for example, the controller 110 may display a notification 800 saying "Share via". Upon detection of a touch on the notification 800, the controller 110 may share the task recommendation icon for which the share event has been detected in step S469. For example, the controller 110 may share the third task recommendation icon 330 representing the third recommendation task being 'email application execution' for the at least one object 'Amanda Kim' as illustrated in FIG. 19E. For example, the controller 110 may transmit the task recommendation icon for which the share event has been detected to a cloud server so that the user of the mobile device 100 may share the task recommendation icon with another user.

In addition, the controller 110 may enable the user of the mobile device 100 to share the task recommendation icon with another user by transmitting the task recommendation icon for which the share event has been detected through an SNS application. The controller 110 may also enable the user of the mobile device 100 to share the task recommendation icon with another user by transmitting the task recommendation icon for which the share event has been detected through a messenger application. The controller 110 may display an icon for executing an application connecting the mobile device 100 to the cloud server, an icon for executing the SNS application, and an icon for executing the messenger application on the touch screen 190. Upon detection of a touch on the icon for executing an application connecting the mobile device 100 to the cloud server, the icon for executing the SNS application, or the icon for executing the messenger application, the controller 110 may share the task recommendation icon for which the share event has been detected with another user by executing the application connecting the mobile device 100 to the cloud server, the SNS application, or the messenger application.

According to an exemplary embodiment of the present invention, a task recommendation icon for which a share event has been detected can be shared. Another user can share the task recommendation icon for which the share event has been detected. When the user executes the task recommendation icon, the task corresponding to the task recommendation icon can be executed. For example, the third task recommendation icon 330 corresponding to the third recommendation task being 'email application execution' for the at least one object 'Amanda Kim' can be shared with another user, as illustrated in FIG. 19E. The user can send an email to Amanda Kim just by executing the third task recommendation icon 330. According to the related art, to send an email to Amanda Kim, another user should input the email address of Amanda Kim into an email address input window. According to exemplary embodiments of the present invention, the user can send an email to Amanda Kim immediately by sharing and executing the third task recommendation icon 330. Another user can immediately execute a task generated based on the user log information of the user of the mobile device 100 by sharing the task recommendation icon.

As is apparent from the above description of exemplary embodiments of the present invention, at least one task recommendation icon can be generated and displayed for content displayed on a touch screen. At least one task recommendation icon can be generated and displayed based on user log information. Furthermore, at least one task recommendation icon can be generated and displayed in such a manner that a user can readily identify the function of the at least one task recommendation icon.

It will be understood that the exemplary embodiments of the present invention can be implemented in hardware, software, or a combination thereof. The software may be stored in a volatile or non-volatile memory device like a ROM irrespective of whether data is deletable or rewritable, in a memory like a RAM, a memory chip, a device, or an integrated circuit, or in a storage medium to which data can be recorded optically or magnetically and from which data can be read by a machine (e.g. a computer), such as a CD, a DVD, a magnetic disk, or a magnetic tape. Further, the exemplary embodiments of the present invention can be implemented in a computer or portable terminal that has a controller and a memory, and the memory is an example of a non-transitory machine-readable storage medium suitable for storing a program or programs including commands to implement the exemplary embodiments of the present invention. Accordingly, the present invention includes a program having a code for implementing the apparatuses or methods defined by the claims and a storage medium readable by a machine that stores the program.

A mobile device can receive the program from a program providing device connected by cable or wirelessly. The program providing device may include a program including commands to implement the exemplary embodiments of the present invention, a memory for storing information required for the exemplary embodiments of the present invention, a communication module for communicating with the mobile device by cable or wirelessly, and a controller for transmitting the program to the mobile device automatically or upon request of the mobile device.

While the invention has been shown and described with reference to certain exemplary embodiments thereof, it will be understood by those skilled in the art that various changes in form and details may be made therein without departing from the scope of the invention as defined by the following claims and their equivalents.

## Claims

1. A method for generating a task recommendation icon (310, 320, 330, 340) in a mobile device, the method comprising:
displaying content on a touch screen (S110);
extracting at least one object from the content (S120);
extracting at least one action for the at least one object based on user log information (S130) which indicates a use pattern including execution information about the at least one action;
generating at least one recommendation task for the at least one object and the at least one action (S140);
generating at least one task recommendation icon (310, 320, 330, 340) representing the at least one recommendation task (S150); and
displaying the at least one task recommendation icon (310, 320, 330, 340) on the touch screen (S160), wherein the at least one task recommendation icon (310, 320, 330, 340) is generated based on the extracted at least one object, and
wherein the at least one task recommendation icon comprises a part of the content and an image icon indicating the extracted action.

2. The method of claim 1, further comprising:
detecting a selection of at least one of the at least one task recommendation icon (310, 320, 330, 340) (S170); and
executing the at least one recommendation task corresponding to the selected at least one task recommendation icon (310, 320, 330, 340) (S180).

3. The method of claim 1, wherein the content includes at least one of an image, a video, and text.

4. The method of claim 1, wherein the at least one object includes at least one of a name, an IDentifier (ID), a place name, an address, a phone number, a location, and a shop name.

5. The method of claim 1, wherein the execution information about the at least one action includes information about at least one of a number of executions, an execution time, and an execution order of the at least one action.

6. The method of claim 1, wherein the at least one task recommendation icon (310, 320, 330, 340) comprises a plurality of task recommendation icons (310, 320, 330, 340); and
wherein the displaying of the at least one task recommendation icon (310, 320, 330, 340) comprises displaying the plurality of task recommendation icons (310, 320, 330, 340) sequentially on the touch screen according to priority levels of the plurality of task recommendation icons (310, 320, 330, 340) determined based on the user log information.

7. The method of claim 6, further comprising:
changing, upon detection of a priority changing gesture, the priority levels of the plurality of task recommendation icons (310, 320, 330, 340) displayed on the touch screen; and
sequentially displaying the plurality of task recommendation icons (310, 320, 330, 340) on the touch screen according to the changed priority levels.

8. The method of claim 1, wherein the displaying of the at least one task recommendation icon (310, 320, 330, 340) on the touch screen comprises:
displaying a task recommendation tray bar or icon on the touch screen; and
displaying the at least one task recommendation icon (310, 320, 330, 340) in a task recommendation tray on the touch screen, upon selection of the task recommendation tray bar or icon (310, 320, 330, 340).

9. The method of claim 1, further comprising:
detecting a shortcut generation event for the at least one task recommendation icon (310, 320, 330, 340); and
displaying, on a home screen, a task recommendation icon (310, 320, 330, 340) for which the shortcut generation event is detected, upon detection of the shortcut generation event.

10. The method of claim 1, further comprising:
detecting a share event for the at least one task recommendation icon (310, 320, 330, 340); and
sharing a task recommendation icon (310, 320, 330, 340) for which the share event is detected, upon detection of the share event.

11. An apparatus for generating a task recommendation icon (310, 320, 330, 340) in a mobile device (100), the apparatus comprising:
a touch screen (190) for displaying content; and
a controller (110) for extracting at least one object from the content, for extracting at least one action for the at least one object based on user log information which indicates a use pattern including execution information about the at least one action, for generating at least one recommendation task for the at least one object and the at least one action, for generating at least one task recommendation icon (310, 320, 330, 340) representing the at least one recommendation task, and for displaying the at least one task recommendation icon (310, 320, 330, 340) on the touch screen (190), wherein the at least one task recommendation icon (310, 320, 330, 340) is generated based on the extracted at least one object, and
wherein the at least one task recommendation icon comprises a part of the content and an image icon indicating the extracted action.

12. The apparatus of claim 11, wherein the controller (110) detects a selection of at least one of the at least one task recommendation icon (310, 320, 330, 340), and executes at least one recommendation task corresponding to the selected at least one task recommendation icon (310, 320, 330, 340).

13. The apparatus of claim 11, wherein when the controller (110) generates at least one task recommendation icon (310, 320, 330, 340), the controller incorporates a part of the content and a symbol representing the at least one action into the at least one task recommendation icon (310, 320, 330, 340).

## Patentansprüche

1. Ein Verfahren zur Erzeugung eines Aufgabenempfehlungssymbols (310, 320, 330, 340) in einer mobilen Vorrichtung, wobei das Verfahren Folgendes umfasst:
Anzeigen von Inhalt auf einem Berührungsbildschirm (S110);
Extrahieren von mindestens einem Objekt aus dem Inhalt (S120);
Extrahieren von mindestens einer Aktion für das mindestens eine Objekt basierend auf Benutzerprotokollinformationen (S130), die ein Verwendungsmuster einschließlich Ausführungsinformationen über die mindestens eine Aktion angeben;
Erzeugen von mindestens einer empfohlenen Aufgabe für das mindestens eine Objekt und die mindestens eine Aktion (S140);
Erzeugen von mindestens einem Aufgabenempfehlungssymbol (310, 320, 330, 340), das die mindestens eine empfohlene Aufgabe (S150) darstellt; und
Anzeigen des mindestens einen Aufgabenempfehlungssymbols (310, 320, 330, 340) auf dem Berührungsbildschirm (S160), wobei das mindestens eine Aufgabenempfehlungssymbol (310, 320, 330, 340) basierend auf dem extrahierten mindestens einen Objekt erzeugt wird, und
wobei das mindestens eine Aufgabenempfehlungssymbol einen Teil des Inhaltes sowie ein Bildsymbol umfasst, das die extrahierte Aktion angibt.

2. Das Verfahren nach Anspruch 1, wobei dieses weiter Folgendes umfasst:
Erkennen einer Auswahl von mindestens einem Aufgabenempfehlungssymbol unter dem mindestens einen Aufgabenempfehlungssymbol (310, 320, 330, 340) (S170); und
Ausführen der mindestens einen empfohlenen Aufgabe entsprechend dem ausgewählten mindestens einen Aufgabenempfehlungssymbol (310, 320, 330, 340) (S180).

3. Das Verfahren nach Anspruch 1, wobei der Inhalt mindestens ein Bild, ein Video und/oder Text umfasst.

4. Das Verfahren nach Anspruch 1, wobei das mindestens eine Objekt mindestens einen Namen, eine Kennung (ID), einen Ortsnamen, eine Adresse, eine Telefonnummer, einen Standort und/oder einen Geschäftsnamen umfasst.

5. Das Verfahren nach Anspruch 1, wobei die Ausführungsinformationen über die mindestens eine Aktion Informationen über zumindest eine Anzahl an Ausführungen, eine Ausführungszeit und/oder eine Ausführungsreihenfolge der mindestens einen Aktion umfassen.

6. Das Verfahren nach Anspruch 1, wobei das mindestens eine Aufgabenempfehlungssymbol (310, 320, 330, 340) eine Vielzahl von Aufgabenempfehlungssymbolen (310, 320, 330, 340) umfasst; und
wobei das Anzeigen des mindestens einen Aufgabenempfehlungssymbols (310, 320, 330, 340) umfasst, dass die Vielzahl von Aufgabenempfehlungssymbolen (310, 320, 330, 340) nacheinander auf dem Berührungsbildschirm entsprechend den Prioritätsebenen der Vielzahl von Aufgabenempfehlungssymbolen (310, 320, 330, 340) angezeigt wird, die basierend auf den Benutzerprotokollinformationen ermittelt wurden.

7. Das Verfahren nach Anspruch 6, wobei dieses weiter Folgendes umfasst:
Ändern der Prioritätsebenen der Vielzahl von auf dem Berührungsbildschirm angezeigten Aufgabenempfehlungssymbolen (310, 320, 330, 340) infolge der Erkennung einer Prioritätsänderungsgeste; und
sequentielles Anzeigen der Vielzahl von Aufgabenempfehlungssymbolen (310, 320, 330, 340) auf dem Berührungsbildschirm entsprechend den geänderten Prioritätsebenen.

8. Das Verfahren nach Anspruch 1, wobei das Anzeigen des mindestens einen Aufgabenempfehlungssymbols (310, 320, 330, 340) auf dem Berührungsbildschirm Folgendes umfasst:
Anzeigen eines Aufgabenempfehlungs-Infobereichs oder -symbols auf dem Berührungsbildschirm; und
Anzeigen des mindestens einen Aufgabenempfehlungssymbols (310, 320, 330, 340) in einem Aufgabenempfehlungs-Infobereich auf dem Berührungsbildschirm infolge der Auswahl des Aufgabenempfehlungs-Infobereichs oder -symbols (310, 320, 330, 340).

9. Das Verfahren nach Anspruch 1, wobei dieses weiter Folgendes umfasst:
Erkennen eines Kurzbefehlerzeugungsereignisses für das mindestens eine Aufgabenempfehlungssymbol (310, 320, 330, 340); und
Anzeigen eines Aufgabenempfehlungssymbols (310, 320, 330, 340), für welches das Kurzbefehlerzeugungsereignis erkannt wurde, auf einem Startbildschirm infolge der Erkennung des Kurzbefehlerzeugungsereignisses.

10. Das Verfahren nach Anspruch 1, wobei dieses weiter Folgendes umfasst:
Erkennen eines Freigabeereignisses für das mindestens eine Aufgabenempfehlungssymbol (310, 320, 330, 340); und
Freigeben eines Aufgabenempfehlungssymbols (310, 320, 330, 340), für welches das Freigabeereignis erkannt wurde, infolge der Erkennung des Freigabeereignisses.

11. Eine Vorrichtung zur Erzeugung eines Aufgabenempfehlungssymbols (310, 320, 330, 340) in einer mobilen Vorrichtung (100), wobei die Vorrichtung Folgendes umfasst:
einen Berührungsbildschirm (190) zum Anzeigen von Inhalt; und
eine Steuereinheit (110) zum Extrahieren von mindestens einem Objekt aus dem Inhalt, zum Extrahieren von mindestens einer Aktion für das mindestens eine Objekt basierend auf Benutzerprotokollinformationen, die ein Verwendungsmuster einschließlich Ausführungsinformationen über die mindestens eine Aktion angeben, zum Erzeugen von mindestens einer empfohlenen Aufgabe für das mindestens eine Objekt und die mindestens eine Aktion, zum Erzeugen von mindestens einem Aufgabenempfehlungssymbol (310, 320, 330, 340), das die mindestens eine empfohlene Aufgabe darstellt, und zum Anzeigen des mindestens einen Aufgabenempfehlungssymbols (310, 320, 330, 340) auf dem Berührungsbildschirm (190), wobei das mindestens eine Aufgabenempfehlungssymbol (310, 320, 330, 340) basierend auf dem extrahierten mindestens einen Objekt erzeugt wird, und
wobei das mindestens eine Aufgabenempfehlungssymbol einen Teil des Inhaltes sowie ein Bildsymbol umfasst, das die extrahierte Aktion angibt.

12. Die Vorrichtung nach Anspruch 11, wobei die Steuereinheit (110) eine Auswahl von mindestens einem Aufgabenempfehlungssymbol unter dem mindestens einen Aufgabenempfehlungssymbol (310, 320, 330, 340) erkennt und mindestens eine empfohlene Aufgabe entsprechend dem ausgewählten mindestens einen Aufgabenempfehlungssymbol (310, 320, 330, 340) ausführt.

13. Die Vorrichtung nach Anspruch 11, wobei die Steuereinheit (110) einen Teil des Inhaltes und ein Symbol, das die mindestens eine Aktion darstellt, in das mindestens eine Aufgabenempfehlungssymbol (310, 320, 330, 340) integriert, wenn die Steuereinheit mindestens ein Aufgabenempfehlungssymbol (310, 320, 330, 340) erzeugt.

## Revendications

1. Un procédé de génération d'une icône de recommandation de tâche (310, 320, 330, 340) dans un dispositif mobile, le procédé comprenant :
l'affichage d'un contenu sur un écran tactile (S110),
l'extraction d'au moins un objet du contenu (S120),
l'extraction d'au moins une action pour le au moins un objet en fonction d'informations de journal d'utilisateur (S130) qui indiquent un modèle d'utilisation comprenant des informations d'exécution relatives à la au moins une action,
la génération d'au moins une tâche de recommandation pour le au moins un objet et la au moins une action (S140),
la génération d'au moins une icône de recommandation de tâche (310, 320, 330, 340) représentant la au moins une tâche de recommandation (S 150), et l'affichage de la au moins une icône de recommandation de tâche (310, 320, 330, 340) sur l'écran tactile (S160), où la au moins une icône de recommandation de tâche (310, 320, 330, 340) est générée en fonction du au moins un objet extrait, et
où la au moins une icône de recommandation de tâche comprend une partie du contenu et une icône d'image indiquant l'action extraite.

2. Le procédé selon la Revendication 1, comprenant en outre :
la détection d'une sélection d'au moins une icône des au moins une icône de recommandation de tâche (310, 320, 330, 340) (S170), et
l'exécution de la au moins une tâche de recommandation correspondant à la au moins une icône de recommandation de tâche sélectionnée (310, 320, 330, 340) (S180).

3. Le procédé selon la Revendication 1, où le contenu comprend au moins un élément parmi une image, une vidéo et du texte.

4. Le procédé selon la Revendication 1, où le au moins un objet comprend au moins un élément parmi un nom, un identifiant (ID), un nom de lieu, une adresse, un numéro de téléphone, un emplacement et un nom de commerce.

5. Le procédé selon la Revendication 1, où les informations d'exécution relatives à la au moins une action comprennent des informations relatives à au moins un élément parmi un nombre d'exécutions, une heure d'exécution et un ordre d'exécution de la au moins une action.

6. Le procédé selon la Revendication 1, où la au moins une icône de recommandation de tâche (310, 320, 330, 340) comprend une pluralité d'icônes de recommandation de tâche (310, 320, 330, 340), et
où l'affichage de la au moins une icône de recommandation de tâche (310, 320, 330, 340) comprend l'affichage de la pluralité d'icônes de recommandation de tâche (310, 320, 330, 340) de manière séquentielle sur l'écran tactile en fonction de niveaux de priorité de la pluralité d'icônes de recommandation de tâche (310, 320, 330, 340) déterminés en fonction des informations de journal d'utilisateur.

7. Le procédé selon la Revendication 6, comprenant en outre :
la modification, après la détection d'un geste de modification de priorité, des niveaux de priorité de la pluralité d'icônes de recommandation de tâche (310, 320, 330, 340) affichées sur l'écran tactile, et
l'affichage séquentiel de la pluralité d'icônes de recommandation de tâche (310, 320, 330, 340) sur l'écran tactile en fonction des niveaux de priorité modifiés.

8. Le procédé selon la Revendication 1, où l'affichage de la au moins une icône de recommandation de tâche (310, 320, 330, 340) sur l'écran tactile comprend :
l'affichage d'une zone de notification ou d'une icône de recommandation de tâche sur l'écran tactile, et
l'affichage de la au moins une icône de recommandation de tâche (310, 320, 330, 340) dans une zone de recommandation de tâche sur l'écran tactile après la sélection de la zone de notification ou de l'icône de recommandation de tâche (310, 320, 330, 340).

9. Le procédé selon la Revendication 1, comprenant en outre :
la détection d'un événement de génération de raccourci destiné à la au moins une icône de recommandation de tâche (310, 320, 330, 340), et
l'affichage, sur un écran d'accueil, d'une icône de recommandation de tâche (310, 320, 330, 340) pour laquelle l'événement de génération de raccourci est détecté, après la détection de l'événement de génération de raccourci.

10. Le procédé selon la Revendication 1, comprenant en outre :
la détection d'un événement de partage destiné à la au moins une icône de recommandation de tâche (310, 320, 330, 340), et
le partage d'une icône de recommandation de tâche (310, 320, 330, 340) pour laquelle l'événement de partage est détecté, après la détection de l'événement de partage.

11. Un appareil de génération d'une icône de recommandation de tâche (310, 320, 330, 340) dans un dispositif mobile (100), l'appareil comprenant :
un écran tactile (190) destiné à l'affichage d'un contenu, et
un dispositif de commande (110) destiné à l'extraction d'au moins un objet du contenu, à l'extraction d'au moins une action pour le au moins un objet en fonction d'informations de journal d'utilisateur qui indiquent un modèle d'utilisation comprenant des informations d'exécution relatives à la au moins une action, à la génération d'au moins une tâche de recommandation pour le au moins un objet et la au moins une action, à la génération d'au moins une icône de recommandation de tâche (310, 320, 330, 340) représentant la au moins une tâche de recommandation, et à l'affichage de la au moins une icône de recommandation de tâche (310, 320, 330, 340) sur l'écran tactile (190), où la au moins une icône de recommandation de tâche (310, 320, 330, 340) est générée en fonction du au moins un objet extrait, et
où la au moins une icône de recommandation de tâche comprend une partie du contenu et une icône d'image indiquant l'action extraite.

12. L'appareil selon la Revendication 11, où le dispositif de commande (110) détecte une sélection d'au moins une des au moins une icône de recommandation de tâche (310, 320, 330, 340) et exécute au moins une tâche de recommandation correspondant à la au moins une icône de recommandation de tâche sélectionnée (310, 320, 330, 340).

13. L'appareil selon la Revendication 11, où, lorsque le dispositif de commande (110) génère au moins une icône de recommandation de tâche (310, 320, 330, 340), le dispositif de commande incorpore une partie du contenu et un symbole représentant la au moins une action dans la au moins une icône de recommandation de tâche (310, 320, 330, 340).
